# EUROPEAN PATENT APPLICATION

(11) **EP 4 797 025 A1**
(43) Date of publication of application: **26.08.2026**
(21) Application number: 25834835.8
(22) Date of filing: 26.12.2025
(51) Int. Cl.: G05D 1/229, G05D 1/226, G05D 1/2285, G05D 1/242, G01S 17/06, G05D 111/10, G05D 111/20

(54) **ELECTRONIC DEVICE AND CONTROL METHOD THEREFOR**

(30) Priority: 08.01.2025 KR 20250002867
(71) Applicant: Samsung Electronics Co., Ltd, Suwon-si, Gyeonggi-do 16677 (KR)
(72) Inventor: The designation of the inventor has not yet been filed
(74) Representative: Appleyard Lees IP LLP
(86) International application number: PCT/KR2025/022929
(87) International publication number: WO 2026/151134

(57) **Abstract**

Disclosed is an electronic apparatus for traveling within a space. The apparatus includes: a communication circuit; a light detection and ranging, LiDAR, sensor; a microphone; a memory storing instructions; and at least one processor configured to obtain at least one candidate location of the electronic apparatus in the space from the LiDAR sensor if a predetermined event occurs, control the communication circuit to transmit a command corresponding to an audio output to a first external device among a plurality of external devices if a current location of the electronic apparatus among the one or more candidate locations is incapable of being obtained based on a signal received from each of the plurality of external devices located in the space via the LiDAR sensor or the communication circuit, and obtain the current location among the one or more candidate locations based on an audio signal if the audio signal output from the first external device is received, through the microphone, based on the command corresponding to the audio output.

## Description

### [Technical Field]

The present disclosure relates to an electronic apparatus and a controlling method thereof.

### [Background Art]

With recent advancements in technologies for artificial intelligence, "AI", AI home robots, have been developed to control a plurality of home appliances in an coordinated manner .

An AI home robot may move within an indoor space to assist a user's daily life and perform appropriate activities to support a convenient and efficient lifestyle for the user. The AI home robot may control home appliances in a house in a coordinated manner, thus enabling the user to use the home appliances more efficiently and conveniently.

During such operation, the AI home robot may identify locations in the space by using a light detection and ranging, "LiDAR", sensor. For example, the AI home robot may generate a map corresponding to the space, through use of the LiDAR sensor while travelling within the space, and store the map in a memory. The AI home robot may then later identify its location in the space by comparing sensor data measured by the LiDAR sensor with the generated map.

The above-described information may be provided as related art to assist in understanding of the present disclosure. No claim or determination is made as to whether any of the above-described content is applicable as prior art related to the present disclosure.

### [Disclosure of Invention]

### [Solution to Problem]

According to an embodiment of the present disclosure, provided is an electronic apparatus for traveling within a space, the apparatus including: a communication circuit; a LiDAR sensor; a microphone; a memory storing instructions; and at least one processor comprising processing circuitry.

The instructions, when executed by the at least one processor individually or collectively, cause the electronic apparatus to: obtain, using the LiDAR sensor, at least one candidate location of the electronic apparatus in the space based on a predetermined event having occurred, based on a current location of the electronic apparatus not being obtained based on sensor data obtained from the LiDAR sensor, or signals received from each of the plurality of external devices located in the space via the communication circuit, control the communication circuit to transmit a command corresponding to an audio output to a first external device among a plurality of external devices , and on receipt, through the microphone, of an audio signal output from the first external device based on the command corresponding to the audio output, obtain the current location from among the one or more candidate locations based on the audio signal output from the first external device.

According to an embodiment of the present disclosure, provided is an electronic apparatus for traveling within a space.

The apparatus may include: a communication circuit; a LiDAR sensor; a memory storing instructions; and at least one processor including processing circuitry.

The instructions, when executed by the at least one processor individually or collectively, cause the electronic apparatus to: receive a wireless signal from each of a plurality of external devices located in the space via the communication circuit upon identifying that a predetermined event occurs, identify a candidate region of the electronic apparatus based on a movement direction of the electronic apparatus obtained based on a change in a strength of the wireless signal, and identify, via the LiDAR sensor, a location of the electronic apparatus in the candidate region.

According to an embodiment of the present disclosure, provided is a controlling method of an electronic apparatus for traveling within a space, the method including: obtaining, using a LiDAR sensor included in the electronic apparatus, at least one candidate location of the electronic apparatus in the space based on a predetermined event having occurred; based on a current location of the electronic apparatus not being obtained based on sensor data obtained from the LiDAR sensor, or signals received from the plurality of external devices located in the space, transmitting a command corresponding to an audio output to a first external device among a plurality of external devices; and on receipt of an audio signal output from the first external device based on the command corresponding to the audio output, obtaining the current location form among the one or more candidate locations based on the audio signal output from the first external device.

### [Brief Description of Drawings]

In describing the drawings, the same or similar components are denoted by the same or similar reference numerals.
FIG. 1 is a diagram illustrating an operation of an electronic apparatus according to an embodiment, in a space.
FIG. 2 is a block diagram illustrating an electronic apparatus according to an embodiment.
FIG. 3 is a block diagram illustrating a specific configuration of the electronic apparatus according to an embodiment.
FIG. 4 is a flowchart illustrating a method of operating of the electronic apparatus to identify a location of the electronic apparatus in a loss situation, according to an embodiment.
FIG. 5 is a diagram illustrating an example of at least one candidate location.
FIG. 6 is a diagram illustrating a case where the electronic apparatus is located at a first candidate location among one or more candidate locations.
FIG. 7 is a diagram illustrating a case where the electronic apparatus is located at a second candidate location among one or more candidate locations.
FIGS. 8A and 8B are diagrams each illustrating an example of an operation of the electronic apparatus to increase a reliability value of an external device based on wireless signals obtained at a plurality of time points.
FIGS. 9A and 9B are diagrams each illustrating an example of an operation of the electronic apparatus to decrease the reliability value of the external device based on wireless signals obtained at a plurality of time points.
FIG. 10 is a diagram illustrating an example of a case where the electronic apparatus is incapable of identifying the location of the electronic apparatus via a LiDAR sensor or the wireless signals.
FIG. 11 is a diagram illustrating an example of an operation of the electronic apparatus to identify the location of the electronic apparatus based on an audio signal.
FIG. 12 is a diagram illustrating an example of an operation of the electronic apparatus to identify the location of the electronic apparatus based on an audio signal.
FIG. 13 is a flowchart illustrating an operation for identifying the location of the electronic apparatus if the loss situation occurs while the electronic apparatus is being moved.
FIG. 14 is a diagram illustrating an example of an operation for identifying the location of the electronic apparatus if the loss situation occurs while the electronic apparatus is being moved.
FIG. 15 is a diagram illustrating an example of an operation of the electronic apparatus moving to a user location.
FIGS. 16A, 16B, and 16C are diagrams each illustrating an example of an operation of the electronic apparatus to display a location search status on a display device.

### [Mode for Invention]

Hereinafter, the embodiments of the present disclosure are described in detail with reference to the accompanying drawings.

An electronic apparatus according to various embodiments as described in the present disclosure may be implemented as any of various types of devices. The electronic apparatus may include, for example, a portable communication device (e.g., a smartphone), a computer device, a portable multimedia device, a portable medical device, a camera, a wearable device, or a home appliance. The electronic apparatus according to an embodiment of the present disclosure is not limited to the aforementioned devices.

It should be understood that various embodiments of the present disclosure and terms used herein are not intended to limit technical features described in the present disclosure to specific embodiments, and rather are intended to include various modifications, equivalents, and substitutions of the corresponding embodiments. Throughout the accompanying drawings, similar components are denoted by similar reference numerals. A singular noun corresponding to an item is intended to include one or more of the items unless a relevant context clearly indicates otherwise. In the present disclosure, an expression such as "A or B", "at least one of A and B", "at least one of A or B", "A, B, or C", "at least one of A, B, and C", "at least one of A, B, or C", or the like may include any one of the items listed together or all possible combinations thereof. such as "first", "second", or the like may be used simply to distinguish one element and another element from each other, and do not limit the corresponding components in any other respect (e.g., importance or order). If a component (e.g., a first component) is mentioned to be "coupled with/to" or "connected to" another component (e.g., a second component) with or without terms "operatively or communicatively", it should be understood that the component may be directly coupled to another component (e.g., in a wired manner), in a wireless manner, or through a third component).

Throughout the specification, a term of a single number may include its plural number unless explicitly indicated otherwise in the context. Throughout the specification, explicitly described to the contrary, "including" any components will be understood to imply the inclusion of other components rather than the exclusion of any other components.

A term such as "module" used in the various embodiments of the present disclosure may include a unit including hardware, software or firmware, and may be used interchangeably with a term such as logic, logic block, component or circuit. The "module" may be an integrally formed component, or a minimum unit or part performing one or more functions. For example, according to an embodiment, the module may be implemented as an application-specific integrated circuit.

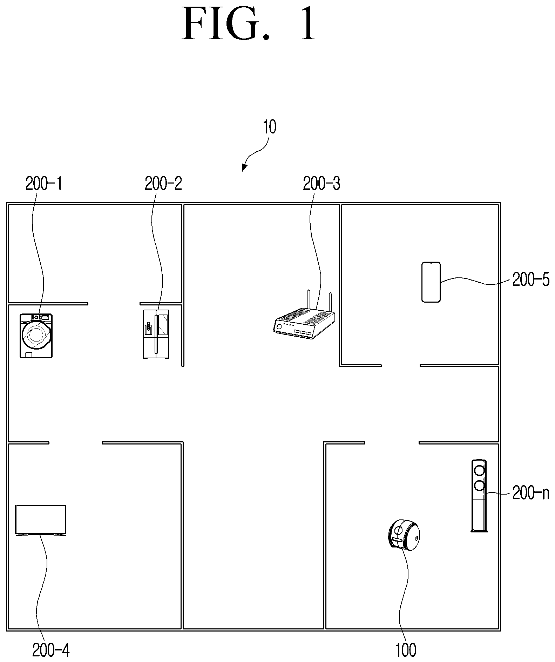

FIG. 1 is a diagram illustrating an operation of an electronic apparatus according to an embodiment, in a space.

The electronic apparatus 100 may travel within an indoor space 10. Located in the indoor space 10 are a plurality of external devices 200-1 to 200-n. The external devices 200-1 to 200-n may each also be referred to as an external electronic apparatus. The electronic apparatus 100 may be a mobile electronic apparatus including a projector. However, the electronic apparatus 100 is not limited thereto, and may be implemented as any of various electronic apparatuses such as a mobile robot, a robot vacuum cleaner, an automated guided vehicle, AGV, an autonomous mobile robot, AMR, a social robot, a projector, a portable projector, a tablet, a mobile device, and a laptop.

The space 10 may is a place where the electronic apparatus 100 is located. The space 10 may be an office or a house, or the like .

The plurality of external devices 200-1 to 200-n may include home appliances or user terminal devices. The home appliances may be of various types. For example, the home appliances may include at least one of a washing machine 200-1, a refrigerator 200-2, a router 200-3, a television 200-4, and an air conditioner 200-n, and is not limited thereto. These home appliances are only examples, and in addition to the aforementioned home appliances, a device capable of performing wireless communication with the electronic apparatus 100 and performing an operation described below, such as a speaker, a light, a dishwasher, an electric range, a robot vacuum cleaner, an air conditioner, a clothes manager, a dryer, or a microwave oven, may be included in the external device according to an embodiment.

According to an embodiment, the user terminal devices may include a personal computer, a terminal, a portable telephone, a smart phone, a handheld device, a wearable device (e.g., a smart watch or a smart ring), or the like, and is not limited thereto.

In order for the electronic apparatus 100 to travel autonomously within the space 10, a location of the electronic apparatus 100 in the space 10 must be identified. The electronic apparatus 100 is arranged to generate a map corresponding to the space 10 while traveling within the space 10. The electronic apparatus 100 may then identify its location by comparing the map with sensor data obtained from a sensor of the electronic apparatus 100. Suitably, sensor data from a LiDAR sensor is used in this way.

The map may include information related to geometry, e.g., a wall or furniture, of the space 10 and information related to locations of the plurality of external devices 200-1 to 200-n. The electronic apparatus 100 is arranged to obtain the geometry of the space from the LiDAR sensor while traveling within the space. For example, the electronic apparatus 100 may output a laser signal from the LiDAR sensor and detect the laser reflected from objects or surfaces. The electronic apparatus 100 may measure a distance to the objects or surfaces based on the detected laser signal. The electronic apparatus 100 may generate point cloud data related to a surrounding space based on the distance to the objects or surfaces, and a direction in which the laser signal is output. The electronic apparatus 100 may obtain information related to a location of the objects or surfaces based on the point cloud data. The electronic apparatus 100 may collect the location information of the objects or surfaces while traveling within the space 10, and ultimately obtain the geometry information of the space 10.

The electronic apparatus 100 is arranged to obtain the location information of the plurality of external devices 200-1 to 200-n by using a communication circuit while traveling within the space. For example, the electronic apparatus 100 may obtain the distance between each of the plurality of external devices 200-1 to 200-n and the electronic apparatus 100 based on a strength of a communication signal, e.g. using a received signal strength indicator. The electronic apparatus 100 may obtain the location information of the plurality of external devices 200-1 to 200-n in the space 10 based on the distances to each of the plurality of external devices 200-1 to 200-n measured at a plurality of points.

Meanwhile, a loss situation may occur if the electronic apparatus 100 is shaken during traveling or if a user lifts the electronic apparatus 100, thereby changing a height of the LiDAR sensor. The loss situation refers to a state in which the electronic apparatus 100 is incapable of accurately identifying its location in the space 10. In a loss situation, the electronic apparatus 100 is required to perform an operation of re-detecting its location.

Hereinafter, various embodiments in which the electronic apparatus 100 re-detects its location in the loss situation are described with reference to the drawings.

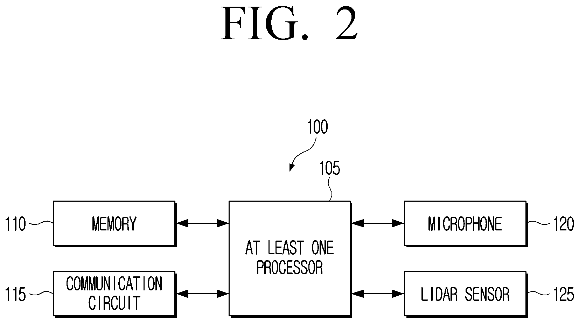

FIG. 2 is a block diagram illustrating the electronic apparatus according to an embodiment.

The electronic apparatus 100 illustrated in FIG. 1 may correspond to the electronic apparatus 100 in FIG. 2. Referring to FIG. 2, the electronic apparatus 100 may include at least one processor 105 (hereinafter referred to as the processor 105), at least one memory 110 (hereinafter, the memory 110), at least one communication circuit 115 (hereinafter, the communication circuit 115), at least one microphone 120 (hereinafter, the microphone 120), and at least one LiDAR sensor 125 (hereinafter, the LiDAR sensor 125).

The processor 105 is arranged to control overall operations of the electronic apparatus 100. For example, the processor 105 may be operatively connected to the memory 110 and the communication circuit 115 to control the operations of the electronic apparatus 100. In addition, the processor 105 may control the operation of the electronic apparatus 100 by executing at least one instruction stored in the memory 110. The processor 105 may include one or more processors.

The processor 105 may be implemented as at least one integrated circuit chip and may process various data. The processor 105 may include at least one electrical circuit and may individually or collectively distribute and process the instructions, or programs, data, or the like, stored in the memory 110. The processor 105 may include a processor cluster including at least one processing circuit. The processor 105 may include any processing circuit operative to control the performance and operation of at least one component, e.g., the memory 110 or the communication circuit, of the electronic apparatus 100. For example, the processor 105, e.g., an application processor may be implemented as a system-on-chip, e.g., as a single chip or a chipset. For example, the processor 105 may be implemented as multiple cores, or at least one core circuit, multiple chips, or multiple chipsets. For example, the processor 105 may include at least one processing circuit. For example, the processor 105 may include at least one processing circuit for individually and/or collectively performing various functions of the present disclosure. As a non-limiting example, at least a portion of the processor 105 may be included in a first chip of the electronic apparatus 100, and at least another portion of the processor 105 may be included in a second chip of the electronic apparatus 100 that is different from the first chip of the electronic apparatus 100.

For example, the processor 105 may include a central processing unit, CPU, a graphics-processing unit, GPU, a neural processing unit, NPU, an image signal processor, ISP, a display controller, a memory controller, a storage controller, a communication processor, CP, and/or a sensor interface. These components of the processor 105 are only examples. For example, the processor 105 may further include other components. For example, some components of the processor 105 may be omitted from the processor 105. For example, some components of the processor 105 may be included as components separate from the electronic apparatus 100 outside the processor 105. For example, some components of the processor 105, e.g., the memory controller, may be included within other components, e.g., at least a portion of the memory 110, an interface, e.g., available for connection to at least one component of the electronic apparatus 100, or a display.

The processor 105 may cause other components of the electronic apparatus 100 to perform the various operations by executing the instructions stored in the memory 110. The central processing circuit may control components of the processor 105 by executing the instructions stored in the memory 110, e.g., a volatile memory and/or a non-volatile memory. The graphics-processing circuit may execute parallel computations, e.g., rendering,). The neural processing circuit or an AI chip may execute computations for an artificial intelligence model, e.g., convolution computation. An image signal processing circuit, may process a raw image obtained from an image sensor into a format suitable for a component in the electronic apparatus 100 or a component of the processor 105. The memory controller, or a memory control circuit, may control reading data from the volatile memory and writing data to the volatile memory. The storage controller, or a storage control circuit, may control reading data from the non-volatile memory and writing data to the non-volatile memory. The communication processing circuit may process data obtained from a component of the processor 105 into a format suitable for transmission to another electronic apparatus via the communication circuit, or process data obtained from another electronic apparatus via the communication circuit into a format suitable for processing by the component of the processor 105. For example, the communication circuit may include at least one communication circuit. the sensor interface, or a sensing data processing circuit, i.e., sensor hub, may process data related to a state of the electronic apparatus 100 and/or a state of the surroundings of the electronic apparatus 100, obtained from a sensor, into a format suitable for a component of the processor 105.

For example, the processor 105 may perform a method according to an embodiment of the present disclosure by executing at least one instruction stored in the memory 110.

If the method according to an embodiment of the present disclosure includes a plurality of operations, the plurality of operations may be performed by one processor or by a plurality of processors. For example, if a first operation, a second operation, and a third operation are performed by a method according to an embodiment, the first operation, the second operation, and the third operation may all be performed by a first processor, or the first operation and the second operation may be performed by the first processor, e.g., a general-purpose processor, and the third operation may be performed by a second processor (e.g., an artificial intelligence-specific processor).

The processor 105 may be implemented as a single-core processor including one core, or as at least one multi-core processor including multiple cores, e.g., homogeneous multiple cores or heterogeneous multiple cores. If the processor 105 is implemented as the multi-core processor, each of the multiple cores included in the multi-core processor may include an internal memory of the processor, such as a cache memory or an on-chip memory, and a common cache shared by the multiple cores may be included in the multi-core processor. In addition, each of the multiple cores (or some of the multiple cores) included in the multi-core processor may independently read and perform a program instruction for implementing the method according to an embodiment of the present disclosure, or all, or some, of the multiple cores may be linked to read and perform the program instruction for implementing the method according to an embodiment of the present disclosure.

If the method according to an embodiment of the present disclosure includes a plurality of operations, the plurality of operations may be performed by one of the multiple cores included in the multi-core processor, or may be performed by the multiple cores. For example, if a first operation, a second operation, and a third operation are performed by the method according to an embodiment, the first operation, the second operation, and the third operation may all be performed by a first core included in the multi-core processor, or the first operation and the second operation may be performed by the first core included in the multi-core processor, and the third operation may be performed by a second core included in the multi-core processor.

In the embodiments of the present disclosure, the processor may refer to at least one system-on-chip integrating the processor with other electronic components, the single-core processor, the multi-core processor, or a core included in the single-core processor or the multi-core processor. Here, the core may be implemented as the CPU, the GPU, the APU, a Memory Interface Controller, a Digital Signal Processor, the NPU, a hardware accelerator, or a machine learning accelerator. However, an embodiment of the present disclosure is not limited thereto. The memory 110 may be implemented as an internal memory, such as a read only memory, e.g., an electrically erasable programmable read only memory, or a static random access memory, included in at least one processor 105, or may be implemented as a memory separate from at least one processor 105. In this case, the memory 110 may be implemented as a memory embedded in the electronic apparatus 100 or as a memory detachable from the electronic apparatus 100, depending on a data store purpose. For example, data for operating the electronic apparatus 100 may be stored in the memory embedded in the electronic apparatus 100, and data for expanding functions of the electronic apparatus 100 may be stored in the memory detachable from the electronic apparatus 100.

The memory embedded in the electronic apparatus 100 may be implemented as at least one of the volatile memory, e.g., a dynamic RAM, a static RAM , or a synchronous dynamic RAM or the non-volatile memory e.g., a one time programmable ROM, a programmable ROM, an erasable and programmable ROM, an electrically erasable and programmable ROM, a mask ROM, a flash ROM, a flash memory, e.g., a NAND flash or a NOR flash, a hard drive, or a solid state drive. The memory detachable from the electronic apparatus 100 may be implemented as at least one of a memory card, e.g., a compact flash memory, a secure digital memory, a micro secure digital memory, a mini secure digital memory, an extreme digital memory, or a multi-media card memory, an external memory capable of being connected to a universal serial bus port , or the like.

The memory 110 may include at least one storage medium (or at least one storage device). For example, the memory 110 may include a memory assembly that includes at least one storage medium. For example, at least one storage medium may include a hard drive, a flash memory, a permanent memory (e.g., the non-volatile memory) such as a read-only memory, a semi-permanent memory, e.g., the volatile memory, such as a random access memory, any other suitable type of storage or storage assembly, or any combination thereof. The memory 110 may include a cache memory, which is at least one different type of memory used to temporarily store data for the function or feature of the electronic apparatus 100. As a non-limiting example, the cache memory may be included within the processor 105. The memory 110 may be fixedly embedded in the electronic apparatus 100, or may be incorporated into at least one suitable type of component, e.g., a subscriber identity module card and/or a secure digital card, that is capable of being repeatedly inserted into and removed from the electronic apparatus 100.

For example, the memory 110 may store at least one software application, such as an operating system, or system software application, a firmware software application, a driver software application, a plug-in, e.g., add-in, add-on, and/or applet) software application, and/or any other suitable software application. For example, at least one software application may include instructions executable by the processor 105. For example, the memory 110 may store instructions callable by an application programming interface. For example, the memory 110 may store the instructions within a library.

In the present disclosure, the term "memory 110" may be used to refer to a storage, a Read Only Memeory, a Random Access Memory within at least one processor 105, or a memory card (not shown), e.g., a micro Secure Digital card, or a memory stick, mounted in the electronic apparatus 100.

The communication circuit 115 is a component for performing communication with various types of external devices by using various types of communication methods. The communication circuit 115 may include a wireless communication module or a wired communication module. Each communication module may be implemented as at least one hardware chip. The communication circuit 115 may be referred to as a communication interface.

The wireless communication module may refer to a module that communicates with the external device in a wireless manner. For example, the wireless communication module may include at least one of a wireless fidelity, Wi-Fi, module, a Bluetooth module, an infrared communication module, or other communication modules.

The Wi-Fi module and Bluetooth module may perform the communication in a Wi-Fi manner and a Bluetooth manner, respectively. In case of using the Wi-Fi module or the Bluetooth module, the communication interface 160 may first transmit and receive various connection information such as a service set identifier or a session key, and connect the communication based on this connection information, and then transmit and receive various information.

The infrared communication module may perform the communication based on infrared data association, IrDA, technology that wirelessly transmits data in a short distance using an infrared ray between visible and millimeter waves.

In addition to the above-described communication methods, another communication module may include at least one communication chip performing the communication based on various wireless communication standards such as Zigbee, third generation, third generation partnership project, long term evolution "LTE", LTE advanced, fourth generation, and fifth generation.

The wired communication module may refer to a module for performing the communication with the external device in a wired manner. For example, the wired communication module may include at least one of a local area network module, an Ethernet module, a pair cable, a coaxial cable, an optical fiber cable, or an ultrawideband module.

The microphone 120 is a component for receiving a user voice or other sounds and converting the same into audio data. The microphone 120 may be arranged to receive the user voice while activated. The electronic apparatus 100 may include the plurality of microphones 120. The microphone 120 may be integrally formed on the upper side, front side, side portion, or the like of the electronic apparatus 100. The microphone 120 may include components such as a microphone that collects analog sound, an amplifier circuit that amplifies the collected sound, an analog to digital, A/D, conversion circuit that samples an amplified user voice and converts the same into a digital signal, and a filter circuit that removes a noise component from the converted digital signal.

The LiDAR sensor 125 may be arranged to output a laser with 360-degree directivity. If the LiDAR sensor 125 receives laser light reflected from an object, the LiDAR sensor 125 may obtain information corresponding to the surrounding space by analyzing a time difference taken for the laser to reflect from the object and return, and the signal strength of the received laser, or the like. The information corresponding to the space may include the geometry information. The geometry information may include the location, distance, direction, or the like of the object. The LiDAR sensor 125 is arranged to provide the obtained geometry information to the processor 105.

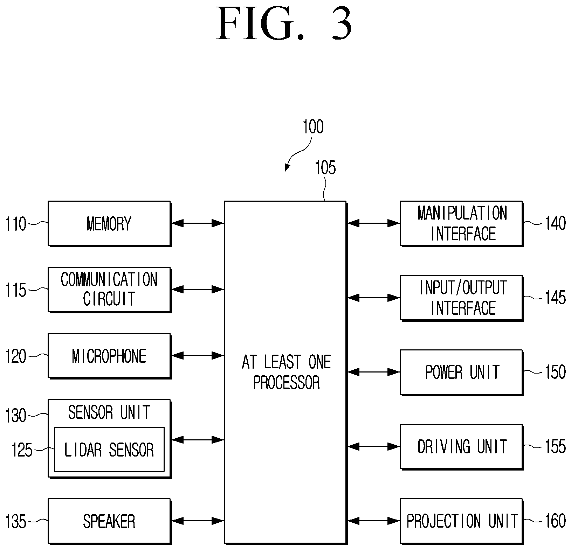

FIG. 3 is a block diagram illustrating a specific configuration of the electronic apparatus according to an embodiment.

The electronic apparatus 100 illustrated in FIG. 2 may correspond to the electronic apparatus 100 in FIG. 3. Referring to FIG. 3, the electronic apparatus 100 includes at least one processor 105, the memory 110, the communication circuit 115, the microphone 120, a sensor unit 130, a speaker 135, a manipulation interface 140, an input/output interface 145, a power unit 150, a driving unit 155, and a projection unit 160. However, such a configuration is only an example, and a new component may be added or some components may be omitted in addition to such a configuration upon implementing the present disclosure. Detailed description of the components illustrated in FIG. 3 that overlap with the components illustrated in FIG. 2 is omitted.

The sensor unit 130 may include at least one sensor. In detail, the sensor unit 130 may include at least one LiDAR sensor 125, a tilt sensor (not shown) for detecting the tilt of the electronic apparatus 100, and an image sensor, not shown, for capturing an image. The tilt sensor may refer to an acceleration sensor or a gyro sensor, and the image sensor may refer to a camera or a depth camera. The tilt sensor may be described as a motion sensor. The sensor unit 130 may include various sensors other than the tilt sensor or the image sensor. For example, the sensor unit 130 may include an illumination sensor and a distance sensor. The distance sensor may refer to a time of flight sensor.

The speaker 135 is a component for outputting an audio signal. In particular, the speaker 135 may include an audio output mixer, an audio signal processor, and an audio output module. The audio output mixer may synthesize a plurality of audio signals to be output into at least one audio signal. For example, the audio output mixer may synthesize an analog audio signal with another analog audio signal, e.g., an analog audio signal received from an external source, into at least one analog audio signal. The audio output module may include the speaker or an output terminal. According to the various embodiments, the audio output module may include a plurality of speakers. In this case, the audio output module may be disposed inside a main body, and audio emitted by covering at least a portion of a diaphragm included in the audio output module may pass through a waveguide and be transmitted to the outside of the main body. The audio output module may include a plurality of audio output units, and the plurality of audio output units may be arranged symmetrically on an exterior of the main body, thereby emitting the audio in all directions, i.e., 360 degrees.

The manipulation interface 140 may include various types of input devices. For example, the manipulation interface 140 may include a physical button. Here, the physical button may include a function key, a directional key (e.g., a four-way key), or a dial button. According to the various embodiments, the physical button may be implemented as a plurality of keys. According to another embodiment, the physical button may be implemented as one key. If the physical button is implemented as one key, the electronic apparatus 100 may receive a user input in which one key is pressed for a threshold time or more. Upon receiving the user input in which one key is pressed for the threshold time or more, the processor 105 may perform a function corresponding to the user input. For example, the processor 105 may provide a lighting function based on the user input.

The manipulation interface 140 may receive the user input using a non-contact method. If the user input is received using a contact method, a physical force is required to be transmitted to the electronic apparatus 100. Therefore, there is a need for a method for controlling the electronic apparatus 100 regardless of the physical force. In detail, the manipulation interface 140 may receive a user gesture and perform an operation corresponding to the received user gesture. The manipulation interface 140 may receive the user gesture from the sensor, e.g., the image sensor or the infrared sensor.

The manipulation interface 140 may receive the user input by using a touch method. For example, the manipulation interface 140 may receive the user input from a touch sensor. According to various embodiments, the touch method may be implemented in a non-contact manner. For example, the touch sensor may determine whether a user body approaches within a threshold distance. The touch sensor may identify the user input even if the user does not come into contact with the touch sensor. In another implementation example, the touch sensor may identify the user input if the user comes into contact with the touch sensor.

The electronic apparatus 100 may receive the user input in various ways other than the manipulation interface 140 described above. In the various embodiments, the electronic apparatus 100 may receive the user input from an external remote control device. The external remote-control device may refer to a remote-control device corresponding to the electronic apparatus 100, e.g., a dedicated control device of the electronic apparatus 100, or a portable communication device of the user, e.g., a smartphone or a wearable device. The portable communication device of the user may store an application for controlling the electronic apparatus 100. The portable communication device may obtain the user input from the application stored therein and transmit the obtained user input to the electronic apparatus 100. The electronic apparatus 100 may receive the user input from the portable communication device and perform an operation corresponding to a user control command.

The electronic apparatus 100 may receive the user input by using voice recognition. According to the various embodiments, the electronic apparatus 100 may receive the user voice from the microphone 120 included in the electronic apparatus 100. According to another embodiment, the electronic apparatus 100 may receive the user voice from the microphone 120 or the external device. In detail, the external device may obtain the user voice from the microphone of the external device and transmit the obtained user voice to the electronic apparatus 100. The user voice transmitted from the external device may be the audio data or digital data converted from the audio data, e.g., the audio data converted into a frequency domain. The electronic apparatus 100 may perform an operation corresponding to the received user voice. In detail, the electronic apparatus 100 may receive the audio data corresponding to the user voice from the microphone 120. In addition, the electronic apparatus 100 may convert the received audio data into the digital data. In addition, the electronic apparatus 100 may convert the converted digital data into text data by using a speech-to-text function. According to the various embodiments, the electronic apparatus 100 may directly perform the speech-to-text function.

According to another embodiment, an external server may perform the speech-to-text function. The electronic apparatus 100 may transmit the digital data to the external server. The external server may convert the digital data into the text data and obtain control command data based on the converted text data. The external server may transmit the control command data to the electronic apparatus 100, here, the control command data may also include the text data). The electronic apparatus 100 may perform the operation corresponding to the user voice based on the obtained control command data.

The electronic apparatus 100 may provide a voice recognition function by using a single assistant, or an AI assistant, which is only one of various embodiments, and may provide the voice recognition function by using a plurality of assistants. Here, the electronic apparatus 100 may provide the voice recognition function by selecting one of the plurality of assistants based on a trigger word corresponding to the assistant or a specific key included in a remote control.

The electronic apparatus 100 may receive the user input by using screen interaction. The screen interaction may refer to a function for identifying whether a predetermined event occurs based on an image projected by the electronic apparatus 100 on a screen, or a projection surface, and obtaining the user input based on the predetermined event. The predetermined event may refer to an event in which a predetermined object is identified at a specific location, e.g., a location at which a user interface, "UI", for receiving the user input is projected. The predetermined object may include at least one of a body part of the user, e.g., a finger, a pointer, or a laser point. If the predetermined object is identified at the location corresponding to the projected UI, the electronic apparatus 100 may identify that the user input for selecting the projected UI is received. For example, the electronic apparatus 100 may project a guide image for guiding the UI to be displayed on the screen. In addition, the electronic apparatus 100 may identify whether the user selects the projected UI. In detail, the electronic apparatus 100 may identify that the user selects the projected UI if the predetermined event is identified at the location of the projected UI. The projected UI may include at least one item. The electronic apparatus 100 may perform a space analysis to identify whether the predetermined event occurs at the location of the projected UI. The electronic apparatus 100 may perform the space analysis by using the sensor, e.g., the image sensor, the infrared sensor, the depth camera, or the distance sensor. By performing the space analysis, the electronic apparatus 100 may identify whether the predetermined event occurs at the specific location, the location at which the UI is projected. In addition, if the predetermined event is identified as occurring at the specific location, the location at which the UI is projected, the electronic apparatus 100 may identify that the user input for selecting the UI corresponding to the specific location is received.

The input/output interface 145 is a component for inputting and outputting at least one of the audio signal or an image signal. The input/output interface 145 may receive at least one of the audio signal or the image signal from the external device, and output the control command to the external device.

In an implementation example, the input/output interface 145 may be implemented as including an interface for inputting and outputting only the audio signal and an interface for inputting and outputting only the image signal, or as a single interface for inputting and outputting both the audio signal and the image signal.

According to the various embodiments of the present disclosure, the input/output interface 145 may be implemented as at least one of wired input/output interfaces such as a high definition multimedia interface, a mobile high-definition link, a universal serial bus, "USB", a USB C-type, a DisplayPort "DP", Thunderbolt, a video graphics array port, a red-green-blue port, a D-subminiature, or a digital visual interface. According to the various embodiments, the wired input/output interface may be implemented as including an interface for inputting and outputting only the audio signal and an interface for inputting and outputting only the image signal, or as one interface for inputting and outputting both the audio signal and the image signal.

The electronic apparatus 100 may receive data through the wired input/output interface, which is only one of various embodiments, and may receive power through the wired input/output interface. For example, the electronic apparatus 100 may receive power from an external battery through the USB C-type or from a power outlet through a power adapter. In another example, the electronic apparatus 100 may receive power from the external device, e.g., a laptop or a monitor, through the DP.

The audio signal may be implemented to be input through the wired input/output interface, and the image signal may be implemented to be input through a wireless input/output interface, or the communication interface. Alternatively, the audio signal may be implemented to be input through the wireless input/output interface, or the communication interface, and the image signal may be implemented to be input through the wired input/output interface.

The power unit 150 may receive power from the external source and supply power to the various components of the electronic apparatus 100. The power unit 150 according to the various embodiments of the present disclosure may receive power in various ways. In the various embodiments, the power unit 150 may receive power by using a connector. The power unit 150 may receive power by using a 220 V direct-current "DC" power cord. However, the electronic apparatus 100 is not limited thereto, and may receive power by using a USB power cord or by using a wireless charging method.

The power unit 150 may receive power from an internal battery or an external battery. The power unit 150 according to the various embodiments of the present disclosure may receive power from the internal battery. For example, the power unit 150 may charge power of the internal battery by using at least one of the 220 V DC power cord, the USB power cord, or a USB C-Type power cord, and receive power from the charged internal battery. The power unit 150 according to the various embodiments of the present disclosure may receive power from the external battery. For example, if the electronic apparatus 100 is connected to the external battery by using various wired communication methods such as the USB power cord, the USB C-Type power cord, or a socket home, the power unit 150 may receive power from the external battery. That is, the power unit 150 may receive power directly from the external battery, or charge the internal battery by using the external battery and receive power from the charged internal battery.

The power unit 150 according to the present disclosure may receive power by using at least one of the plurality of power supply methods described above.

Regarding power consumption, the electronic apparatus 100 may have power consumption less than a predetermined value, e.g., 43W, due to reasons such as the type of socket or other standards. Here, the electronic apparatus 100 may vary the power consumption to reduce the power consumption upon using a battery. That is, the electronic apparatus 100 may vary the power consumption based on a power supply method and power usage, or the like.

The driving unit 155 may drive at least one hardware component included in the electronic apparatus 100. The driving unit 155 may generate a physical force and transmit the same to at least one hardware component included in the electronic apparatus 100.

The driving unit 155 may generate driving power for an operation for moving the hardware component included in the electronic apparatus 100, e.g., moving the electronic apparatus 100, or rotating the component, e.g., rotating a projection lens.

The driving unit 155 may adjust a projection direction, or projection angle, of the projection unit 160. The driving unit 155 may move the location of the electronic apparatus 100. The driving unit 155 may control a movement member to move the electronic apparatus 100. For example, the driving unit 155 may control the movement member by using a motor.

The projection unit 160 is a component for projecting an image to the outside. According to the various embodiments of the present disclosure, the projection unit 160 may be implemented as any of various projection types, e.g., a cathode-ray tube "CRT" type, a liquid crystal display "LCD" type, a digital light processing "DLP" type, or a laser type. For example, the CRT type may basically use the same principle as a CRT monitor. The CRT type may display the image on a screen by magnifying the image by using a lens in front of a cathode-ray tube. The CRT type may be classified into a single-tube type and a three-tube type based on the number of cathode-ray tubes, and in case of the three-tube type, red, green, and blue cathode-ray tubes may be implemented separately.

As another example, the LCD type may display the image by passing light output from a light source through a liquid crystal. The LCD type may be classified into a single-panel type and a three-panel type. In case of the three-panel type, light output from the light source may be separated into red, green, and blue by a dichroic mirror, i.e., a mirror that only reflects light of a specific color and transmits the others, may then pass through the liquid crystal, and may then be focused again onto a single point.

In another example, the DLP type may display the image by using a digital micromirror device "DMD" chip. The DLP-type projection unit may include a light source, a color wheel, the DMD chip, a projection lens, or the like. Light output from the light source may be colored as light passes through a rotating color wheel. Light passed through the color wheel may be input to the DMD chip. The DMD chip may include numerous micromirrors and reflect light input into the DMD chip. The projection lens may serve to magnify light reflected from the DMD chip into an image size.

As another example, the laser type may include a diode-pumped solid-state "DPSS" laser and a galvanometer. The laser type that outputs various colors may use a laser in which three DPSS lasers are respectively installed for red, green, and blue colors, and their optical axes then overlap with one another by using a special mirror. The galvanometer may include a mirror and a high-power motor to move the mirror at a high speed. For example, the galvanometer may rotate the mirror at up to 40kHz. The galvanometer may be mounted in a scanning direction. In general, the projector may perform a flatbed scanning, and the galvanometer may thus also be divided into and disposed along an x-axis and a y-axis.

The projection unit 160 may include various types of light sources. For example, the projection unit 160 may include at least one light source among a lamp, a light emitting diode , and a laser.

The projection unit 160 may output the image in an aspect ratio of 4:3, an aspect ratio of 5:4, or a wide aspect ratio of 16:9, based on a purpose of the electronic apparatus 100, a user setting, or the like, and may output the image having any of various resolutions such as wide video graphics array WVGA, 854*480 pixels, super video graphics array SVGA, 800*600 pixels, extended graphics array XGA, 1024*768 pixels, wide extended graphics array WXGA, 1280*720 pixels, WXGA, 1280*800 pixels, super extended graphics array SXGA, 1280*1024 pixels, ultra extended graphics array UXGA, 1600*1200 pixels and full high-definition full HD, 1920*1080 pixels, based on the aspect ratio.

The projection unit 160 may perform various functions to adjust the output image under control of at least one processor 105. For example, the projection unit 160 may perform a zoom function, a keystone function, a quick corner, and/or four-corner keystone function, a lens shift function, or the like.

In detail, the projection unit 160 may enlarge or reduce an image based its distance, i.e., a projection distance from a screen. That is, the projection unit 160 may perform the zoom function based on the distance from the screen. Here, the zoom function may include a hardware method for adjusting a screen size by moving the lens, and a software method for adjusting the screen size by cropping the image, or the like. If the zoom function is performed, a focus of the image is required to be adjusted. For example, a method for adjusting the focus may include a manual focusing method and an electric focusing method. The manual focusing method refers to a method of manually adjusting the focus, and the electric focusing method refers to a method in which the projector automatically adjusts the focus by using a motor built therein upon performing the zoom function. Upon performing the zoom function, the projection unit 160 may provide a digital zoom function by using software, and may provide an optical zoom function that performs the zoom function in which the zoom function is performed by moving the lens by using the driving unit 155.

The projection unit 160 may perform the keystone correction function. If a height does not match a front projection, the screen may be distorted upwards or downwards. The keystone correction function refers to a function for correcting the screen distortion. For example, if the screen is distorted leftward or rightward, the distortion may be corrected by using a horizontal keystone, and if the screen is distorted upwards or downwards, the distortion may be corrected by using a vertical keystone. The quick corner, four-corner, keystone correction function refers to a function for correcting the screen if a center region of the screen is normal and its corner region is unbalanced. The lens shift function refers to a function for moving the screen as it is if the screen is off-screen.

The projection unit 160 may provide the zoom/keystone/focusing functions by automatically analyzing a surrounding environment and a projection environment without the user input. In detail, the projection unit 160 may automatically provide the zoom/keystone/focusing functions based on a distance between the electronic apparatus 100 and the screen, information about a space where the electronic apparatus 100 is currently located, information about an amount of ambient light, or the like, detected by the sensor, e.g., the depth camera, the distance sensor, the infrared sensor, or an illuminance sensor.

The projection unit 160 may provide the lighting function by using a light source. In particular, the projection unit 160 may provide the lighting function by outputting the light source using the LED. According to the various embodiments, the projection unit 160 may include one LED, and according to another embodiment, the electronic apparatus 100 may include a plurality of LEDs. The projection unit 160 may output the light source by using a surface-emitting LED in an implementation example. The surface-emitting LED may refer to an LED in which an optical sheet is disposed on an upper side of the LED for the light source to be evenly distributed and output. In detail, if the light source is output through the LED, the light source may be evenly distributed through the optical sheet, and the light source distributed through the optical sheet may be incident on a display panel.

The projection unit 160 may provide the user with a dimming function for adjusting an intensity of the light source. In detail, if the user input for adjusting the intensity of the light source is received from the user through the manipulation interface 140, e.g., a touch display button or a dial button, the projection unit 160 may control the LED to output light at an intensity of the light source corresponding to the received user input.

The projection unit 160 may provide the dimming function based on content analyzed by at least one processor 105 without the user input. In detail, the projection unit 160 may control the LED to output light at the intensity of the light source based on information, e.g., content type or content brightness, about the currently-provided content.

The projection unit 160 may control a color temperature under the control of at least one processor 105. At least one processor 105 may control the color temperature based on the content. In detail, if the content to be output is identified, at least one processor 105 may obtain frame-by-frame color information of the content whose output is determined. In addition, at least one processor 105 may control the color temperature based on the obtained frame-by-frame color information. At least one processor 105 may obtain at least one primary color of a frame based on the frame-by-frame color information. In addition, at least one processor 105 may adjust the color temperature based on at least one obtained primary color. For example, the color temperature adjustable by at least one processor 105 may be classified into a warm type or a cold type. It is assumed that a frame to be output (hereinafter, an output frame) includes a scene where a fire occurs. At least one processor 105 may identify (or obtain) that the primary color is red based on the color information included in a current output frame. In addition, at least one processor 105 may identify the color temperature corresponding to the identified primary color (red). The color temperature corresponding to red may be the warm type. At least one processor 105 may use the artificial intelligence model to obtain the color information or primary color of the frame. According to various embodiments, the artificial intelligence model may be stored in the electronic apparatus 100 (e.g., the memory 110). According to another embodiment, the artificial intelligence model may be stored in the external server capable of communicating with the electronic apparatus 100.

The electronic apparatus 100 may further include a display, not shown.

The display may be implemented as any of various types of displays such as a liquid crystal display , an organic light emitting diode display, or a plasma display panel . The display may also include a driving circuit, a backlight unit, or the like, which may be implemented as an amorphous silicon thin film transistor , a low temperature poly silicon thing film transistor, or an organic thin film transistor. The display, not shown, may be implemented as a touchscreen combined with the touch sensor, a flexible display, a three-dimensional display, or the like. According to the various embodiments of the present disclosure, the display may include not only the display panel for outputting an image, but also a bezel for housing the display panel. In particular, according to the various embodiments of the present disclosure, the bezel may include the touch sensor, not shown, for detecting a user interaction.

A movement member, not shown, may refer to a member for moving the electronic apparatus 100 from a first location to a second location in the space where the electronic apparatus 100 is disposed. The electronic apparatus 100 may control the movement member to move the electronic apparatus 100 by using a force generated from the driving unit 155. The electronic apparatus 100 may generate the force to be transmitted to the movement member by using the motor included in the driving unit 155.

The movement member may include at least one wheel, e.g., a circular wheel. The electronic apparatus 100 may move to a target location, or a destination, by using the movement member. If the user input or the control command is received, the electronic apparatus 100 may rotate the movement member by transmitting the force generated by using the motor to the movement member. The electronic apparatus 100 may control the movement member to adjust a rotation speed, a rotation direction, or the like. The electronic apparatus 100 may perform a moving operation, or a moving function, by controlling the movement member based on the target location or a movement direction, or the like.

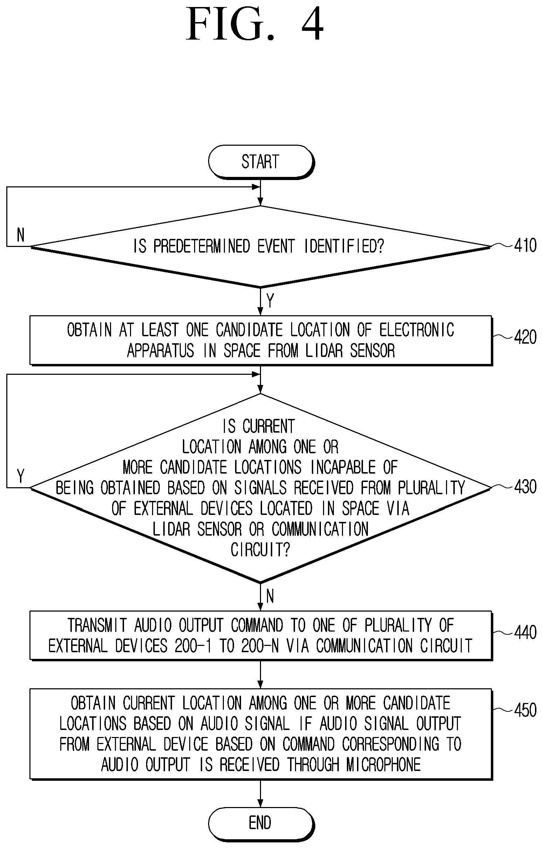

FIG. 4 is a flowchart illustrating an operation of the electronic apparatus to identify the location of the electronic apparatus in the loss situation according to an embodiment.

According to an embodiment, the processor 105 of the electronic apparatus 100 may perform at least one operation among the operations shown in FIG. 4. If executed by the processor 105 of the electronic apparatus 100, the instructions stored in the memory 110 of the electronic apparatus 100 may cause the electronic apparatus 100 to perform the operations in FIG. 4. However, the present disclosure is not limited thereto, and some or all of the operations in FIG. 4 may be performed separately by a server or by the electronic apparatus 100. For example, among the operations in FIG. 4, a subset of the operations, such as may be conceptually referred to as "operation A" may be performed by the electronic apparatus, and another subset of the operations such as may be conceptually referred to as "operation B" may be performed by a server, .e.g. a server which is operatively connected to the electronic apparatus 100.

According to an embodiment, in operation 410, the electronic apparatus 100 may identify a predetermined event. The predetermined event may include an event in which a stationary location of the electronic apparatus 100 is incapable of being obtained while the electronic apparatus 100 is stationary, or is configured to assume a stationary state. The stationary state may refer to a state in which the electronic apparatus 100 is not traveling. The predetermined event may be deemed to occur if a change occurs in the height at which the LiDAR sensor 125 of the electronic apparatus 100. This can be detected if the LiDAR sensor 125 measures in the sensor data an operation in which the user lifts and lowers the electronic apparatus 100, or if a structure of the space 10 is changed. The stationary location may include information about the location of the electronic apparatus 100 in the space if the electronic apparatus 100 is stationary.

According to an embodiment, the electronic apparatus 100 may identify whether the predetermined event occurs by comparing the geometry information with the sensor data. The geometry information may be included in the map corresponding to the space 10. The electronic apparatus 100 may obtain the sensor data, hereinafter referred to as scan data, from the LiDAR sensor 125.

According to an embodiment, the electronic apparatus 100 may determine a similarity between the scan data, e.g., point cloud information, and the geometry information by comparing the scan data with the geometry information. The electronic apparatus 100 may identify that the predetermined event occurs if the similarity is within a predetermined range, e.g., 50% or more and less than 80%, or there are a plurality of locations where the similarity is greater than or equal to a predetermined value, e.g., 80%. That is, the electronic apparatus 100 may identify that the predetermined event occurs if the electronic apparatus 100 is incapable of identifying the location of the electronic apparatus 100, such as in a case where the number of locations where the similarity is greater than or equal to the predetermined value is not equal to one. The predetermined range or the predetermined value may be determined upon manufacturing or initial use of the electronic apparatus 100, but is not limited thereto. The predetermined range or the predetermined value may be determined periodically or frequently upon user settings or product updates.

According to an embodiment, in operations 410-Y and 420, if the predetermined event is identified as occurring, the electronic apparatus 100 may obtain at least one candidate location of the electronic apparatus 100 in the space 10 from the LiDAR sensor 125. The candidate location may refer to the location of the electronic apparatus 100 in the space 10.

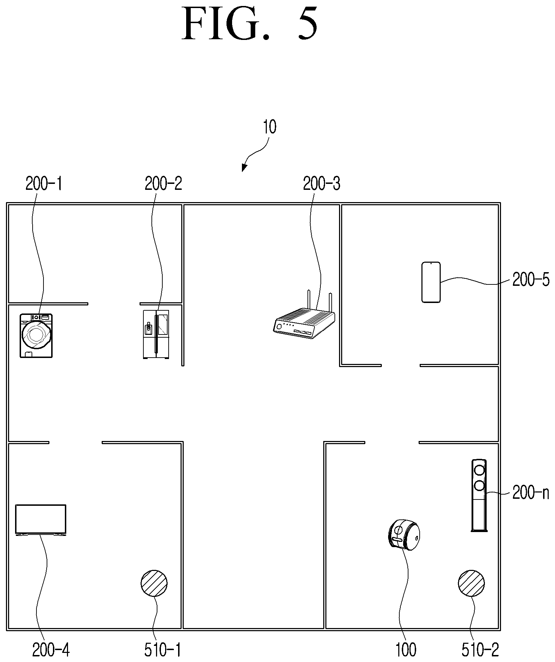

FIG. 5 is a diagram illustrating an example of at least one candidate location.

Referring to FIG. 5, the electronic apparatus 100 may obtain at least one candidate location 510-1 or 510-2 from the LiDAR sensor 125. According to an embodiment, the electronic apparatus 100 is arranged to output the laser signal from the LiDAR sensor 125. The electronic apparatus 100 receives, from the LiDAR sensor 125, a laser signal reflected from any objects in the space where the electronic apparatus 100 is located. Based on the received reflected laser signal, the electronic apparatus 100 may obtain the information corresponding to the space where the electronic apparatus 100 is located. For example, the electronic apparatus 100 may determine at least one candidate location 510-1 or 510-2 in the space 10 having the similarity greater than or equal to the predetermined value, by comparing the information corresponding to the space obtained from the LiDAR sensor 125 with the geometry information stored in the memory 110. Meanwhile, FIG. 5 illustrates an example in which the number of candidate locations is two. However, there is no limit to the number of candidate locations. For example, there may be three or more candidate locations.

Referring to FIG. 4, in operation 430, the electronic apparatus 100 is arranged to receive wireless signals from the plurality of external devices 200-1 to 200-n. located in the space 10 via the communication circuit 115. Hereinafter, the external devices in the plurality may be referred to as "the external device 200". According to an embodiment, the electronic apparatus 100 is arranged to identify whether it is capable of determining the current location of the electronic apparatus 100 from among one or more candidate locations, based on the signals received from the plurality of external devices located in the space via the LiDAR sensor 125 alone, or in combination with the wireless signals received from the communication circuit 115. For example, the electronic apparatus 100 may receive a wireless signal from each of the plurality of external devices via the communication circuit 115. The wireless signals may be a Bluetooth low energy signal or a Wi-Fi signal, but is not limited thereto. The electronic apparatus 100 may identify whether the current location of the electronic apparatus 100 among one or more candidate locations is capable of being obtained based on the sensor data obtained from the LiDAR sensor 125 or the wireless signal.

According to an embodiment, the electronic apparatus 100 may identify the location of the electronic apparatus 100 via the LiDAR sensor 125 or the wireless signal. The electronic apparatus 100 may detect the wireless signal transmitted from the external device 200 while traveling within the space 10. The electronic apparatus 100 may store, in the memory 110, the type and strength of the wireless signal corresponding to each of a plurality of regions while traveling within the space 10.

The space 10 may be divided into the plurality of regions. The electronic apparatus 100 may divide the space 10 into the plurality of regions based on the regions each corresponding to a room. The electronic apparatus 100 may divide the space into the plurality of regions based on various criteria, such as classifying the space into the plurality of regions according to a grid structure.

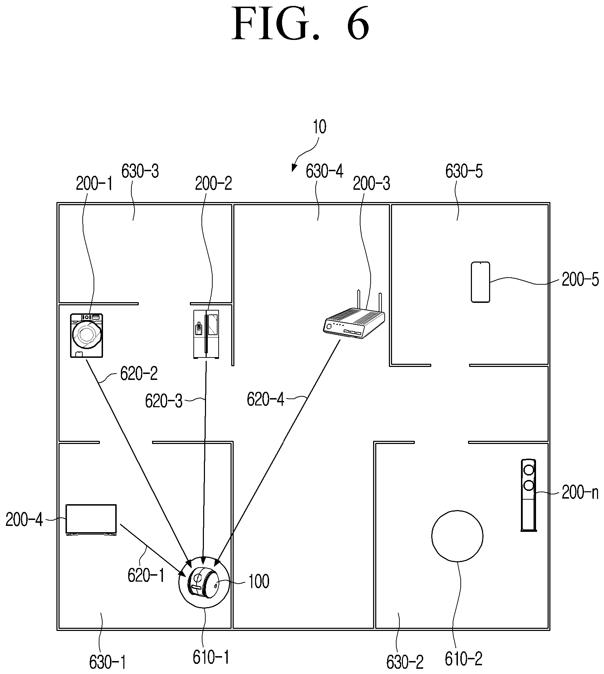

The type of the wireless signal may refer to information for identifying the external device corresponding to the wireless signal received by the electronic apparatus 100 among the external devices 200. The electronic apparatus 100 may identify the external device 200 that transmits the wireless signal based on information, e.g., a Medium Access Control address or an advertisement packet, included in the wireless signal. If the electronic apparatus 100 receives the wireless signal from the external device 200 one time or more, the electronic apparatus 100 may store information about the type of the wireless signal transmitted from the external device 200 in the memory 110. If the wireless signal is received from the same external device, the electronic apparatus 100 may then identify the external device that transmits the wireless signal. Hereinafter, an operation for identifying the location of the electronic apparatus 100 via the LiDAR sensor 125 or the wireless signal is described with reference to FIGS. 6 to 10.

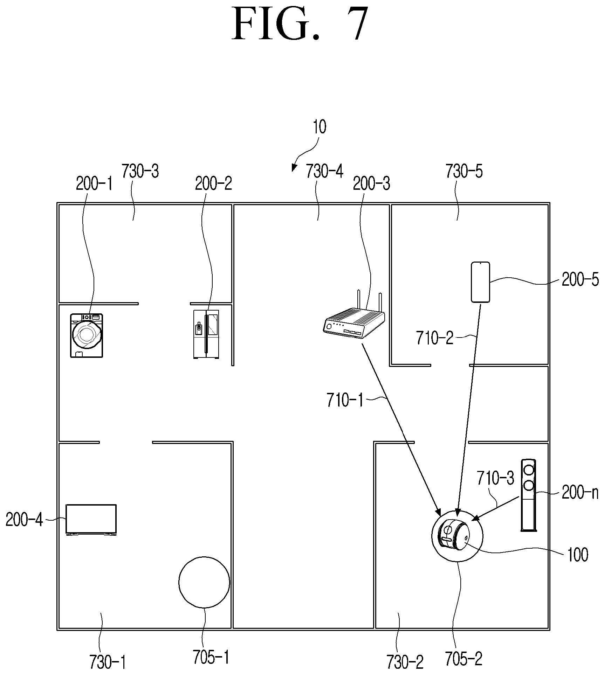

FIGS. 6 and 7 are diagrams each illustrating an example of the operation for identifying the location of the electronic apparatus based on the wireless signal, according to an embodiment.

FIG. 6 is a diagram illustrating a case where the electronic apparatus is located at the first candidate location among one or more candidate locations, according to an embodiment.

Referring to FIG. 6, the space 10 may be divided into a plurality of regions 630-1 to 630-5 based on rooms. The electronic apparatus 100 may store the type and strength of a wireless signal corresponding to each of the plurality of regions 630-1 to 630-5. The strength of the wireless signal may include a range of signal strengths detected in the region.

For example, the memory 110 may store the types of the wireless signals corresponding to the first region 630-1 among the plurality of regions 630-1 to 630-5, e.g., wireless signals transmitted from the first device 200-1, the second device 200-2, the third device 200-3, and the fourth device 200-4) and the signal strengths of the wireless signals for each type (e.g., a strength of the wireless signal (-100 dB or more and less than -90 dB) transmitted from the first device, a strength of the wireless signal (-100 dB or more and less than -90 dB) transmitted from the second device, a strength of the wireless signal (less than -100 dB) transmitted from the third device, and a strength of the wireless signal (-60 dB or more and less than -40 dB) transmitted from the fourth device). For example, the memory 110 may store the types of the wireless signals corresponding to the second region 630-2, e.g., the wireless signals transmitted from the third device 200-3, the fifth device 200-5, and the n-th device 200-n) and the signal strengths of the wireless signals for each type (e.g., the strength of the wireless signal (-100 dB or more and less than -90 dB) transmitted from the third device, the strength of the wireless signal (-100 dB or more and less than -90 dB) transmitted from the fifth device, and the strength of the wireless signal (-60 dB or more and less than -40 dB) transmitted from the n-th device).

For example, the memory 110 may store: the types of the wireless signals corresponding to the third region 630-3, e.g., the wireless signals transmitted from the first device 200-1 and the second device 200-2, and the signal strengths of the wireless signals for each type; the types of the wireless signals corresponding to the fourth region 630-4, e.g., the wireless signals transmitted from the second device 200-2 and the third device 200-3 and the signal strengths of the wireless signals for each type; and the type of the wireless signal corresponding to the fifth region 630-5, e.g., the wireless signals transmitted from the third device 200-3 and the fifth device 200-5, and the signal strengths of the wireless signals for each type.

According to an embodiment, the electronic apparatus 100 may obtain the types and strengths of a wireless signal corresponding to a candidate location 610-1 or 610-2. For example, the electronic apparatus 100 may identify the types and strengths of the wireless signals corresponding to the region 630-1 or 630-2 including the candidate location 610-1 or 610-2 as the types and strengths of the wireless signals corresponding to the candidate region 610-1 or 610-2. For example, the electronic apparatus 100 may obtain the types of the wireless signals, e.g., the wireless signals transmitted from the first device 200-1, the second device 200-2, the third device 200-3, and the fourth device 200-4, and the strengths of the wireless signals corresponding to the first candidate location 610-1. For example, the electronic apparatus 100 may obtain the types of the wireless signals, e.g., the wireless signals transmitted from the third device 200-3, the fifth device 200-5, and the n-th device 200-n, and the strengths of the wireless signals corresponding to the second candidate location 610-2.

FIG. 6 is a diagram illustrating a case where the electronic apparatus 100 is located at the first candidate location 610-1. The electronic apparatus 100 may receive wireless signals 620-1 to 620-4 from the plurality of external devices 200-1 to 200-4 via the communication circuit 115.

According to an embodiment, the electronic apparatus 100 may identify the location of the electronic apparatus 100 based on the wireless signals 620-1 to 620-4. For example, the electronic apparatus 100 may identify the location of the electronic apparatus 100 by comparing the wireless signals 620-1 to 620-4 with the wireless signals corresponding to each of the plurality of candidate locations 610-1 and 610-2.

For example, the electronic apparatus 100 may obtain a type of the external device that transmits the wireless signals 620-1 to 620-4, e.g., the first device 200-1, the second device 200-2, the third device 200-3, and the fourth device 200-4, based on the wireless signals 620-1 to 620-4. The electronic apparatus 100 may obtain the strengths of the wireless signals 620-1 to 620-4, e.g., the wireless signal strength such as -95 dB from the first device, the wireless signal strength such as -95 dB from the second device, the wireless signal strength such as -102 dB from the third device, and the wireless signal strength such as -45 dB from the fourth device.

For example, the electronic apparatus 100 may identify the first candidate location 610-1 as the location of the electronic apparatus if the types of the external devices, e.g., the first device 200-1, the second device 200-2, the third device 200-3, and the fourth device 200-4, are included in the types of the wireless signals, e.g., the signals transmitted from the first device 200-1, the second device 200-2, the third device 200-3, and the fourth device 200-4, corresponding to the candidate location e.g., the first candidate location 610-1, and the strength of the wireless signals 620-1 to 620-4 are included in the strengths of the wireless signals corresponding to the candidate location.

FIG. 7 is a diagram illustrating a case where the electronic apparatus is located at the second candidate location among one or more candidate locations.

According to an embodiment, the electronic apparatus 100 may receive wireless signals 710-1 to 710-3 from the plurality of external devices, e.g., the third device 200-3, the fifth device 200-5, and the n-th device 200-n, via the communication circuit 115.

According to an embodiment, the electronic apparatus 100 may identify the location of the electronic apparatus 100 based on the wireless signals 710-1 to 710-3. For example, the electronic apparatus 100 may identify the location of the electronic apparatus 100 by comparing the wireless signals 710-1 to 710-3 with wireless signals corresponding to a plurality of candidate locations 705-1 and 705-2.

For example, the electronic apparatus 100 may obtain a type of the external device that transmits the wireless signals 710-1 to 710-3 based on the wireless signals 710-1 to 710-3, e.g., the third device 200-3, the fifth device 200-4, and the n-th device 200-n. The electronic apparatus 100 may obtain the strengths of the wireless signals 710-1 to 710-3, e.g., the wireless signal strength such as -95 dB from the third device, the wireless signal strength such as -94 dB from the fifth device, and the wireless signal strength such as -45 dB from the n-th device.

For example, the electronic apparatus 100 may identify the second candidate location 705-2 as the location of the electronic apparatus if the types of the external devices, ,e.g., the third device 200-3, the fifth device 200-4, and the n-th device 200-n, are included in the types of the wireless signals, e.g., the signals transmitted from the third device 200-3, the fifth device 200-4, and the n-th device 200-n, corresponding to the candidate location, e.g., the second candidate location 705-2, and the strengths of the wireless signals 710-1 to 710-3 are included in the strengths of the wireless signals corresponding to the candidate location.

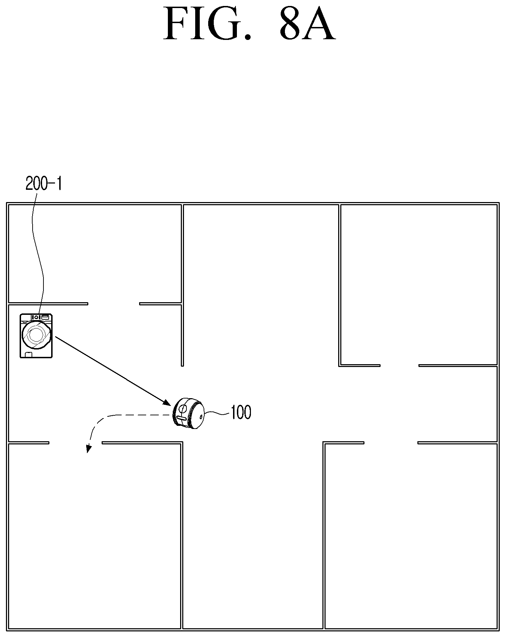

According to an embodiment, the electronic apparatus 100 may identify an external device having reliability greater than or equal to a predetermined value among the plurality of external devices 200-1 to 200-n. The electronic apparatus 100 may obtain the reliability of each external device based on a movement history of each external device in the space for each of the plurality of external devices. An operation for obtaining the reliabilities of the plurality of external devices 200-1 to 200-n is described in detail with reference to FIGS. 8A to 9B.

FIGS. 8A to FIG. 9B are diagrams each illustrating an example of an operation for calculating reliability values of the plurality of external devices.

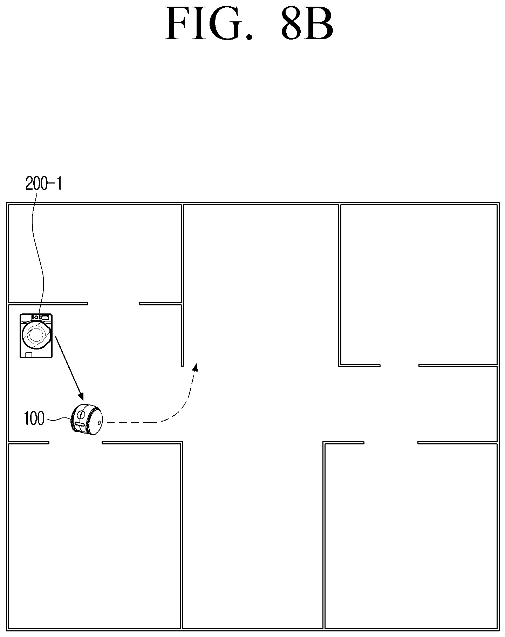

FIGS. 8A and 8B are diagrams each illustrating an example of an operation of the electronic apparatus to increase the reliability value of the external device based on the wireless signals obtained at a plurality of time points.

According to an embodiment, the electronic apparatus 100 may receive the wireless signal from the first device 200-1 at a plurality of time points, e.g., a first time point and a second time point, while traveling within the space. The electronic apparatus 100 may increase or decrease the reliability value of the first device 200-1 based on the received wireless signal.

Referring to FIG. 8A, the electronic apparatus 100 may receive the wireless signal from the first device 200-1 at the first time point. The electronic apparatus 100 may identify a location of the first device 200-1, hereinafter, "the first location", based on a strength of the wireless signal received at the first time point. The operation for identifying the location of the external device based on the wireless signal is described above, and a redundant description thereof is thus omitted.

Referring to FIG. 8B, the electronic apparatus 100 may receive the wireless signal from the first device 200-1 at the second time point. The electronic apparatus 100 may identify the location of the first device 200-1, hereinafter, "the second location", based on a strength of the wireless signal received at the second time point. If the electronic apparatus 100 identifies the first location and the second location as matching each other, the reliability value of the first device 200-1 may be increased.

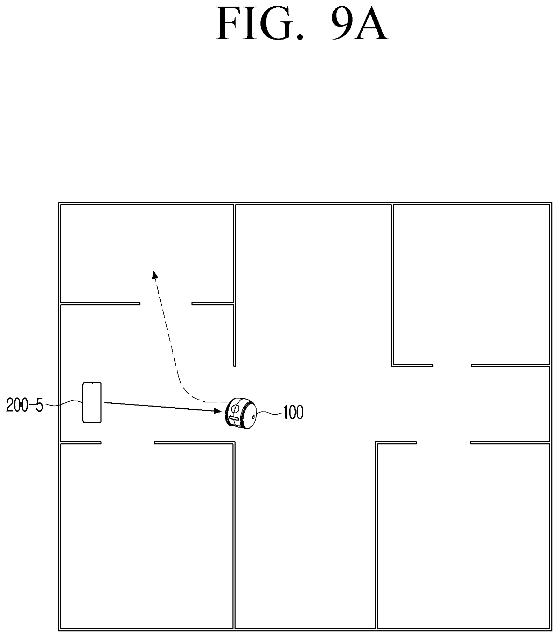

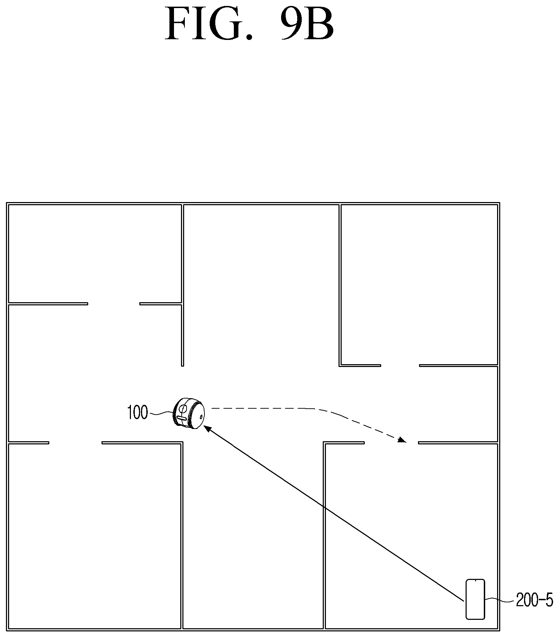

FIGS. 9A and 9B are diagrams each illustrating an example of an operation of the electronic apparatus to decrease the reliability value of the external device based on the wireless signals obtained at the plurality of time points.

According to an embodiment, the electronic apparatus 100 may receive the wireless signal from the fifth device 200-5 at the plurality of time points, e.g., the first time point and the second time point, while traveling within the space.

Referring to FIG. 9A, the electronic apparatus 100 may receive the wireless signal from the fifth device 200-5 at the first time point. The electronic apparatus 100 may identify the location of the fifth device 200-5, hereinafter, "the first location", based on a strength of the wireless signal received at the first time point.

Referring to FIG. 9B, the electronic apparatus 100 may receive the wireless signal from the fifth device 200-5 at the second time point. The electronic apparatus 100 may identify the location of the fifth device 200-5, hereinafter, "the second location", based on a strength of the wireless signal received at the second time point. If the electronic apparatus 100 identifies the first location and the second location as different from each other, the reliability value of the fifth device 200-5 may be reduced.

According to an embodiment, the electronic apparatus 100 may identify the location of the electronic apparatus 100 based on the strength of the signal, including based on the wireless signal, received from the external device having the reliability greater than, or equal to, the predetermined value, from among the plurality of external devices. For example, it is assumed that the reliabilitys of the third external device 200-3 and the n-th external device 200-n among the plurality of external devices 200-1 to 200-n are greater than or equal to the predetermined value, and the reliability of the fifth device 200-5 is less than the predetermined value. The electronic apparatus 100 may identify the location of the electronic apparatus 100 based on the remaining wireless signals 710-1 and 710-3 excluding the wireless signal 710-2 received from the fifth device 200-5 among the wireless signals 710-1 to 710-3 received from the plurality of external devices, e.g., the third device 200-3, the fifth device 200-4, and the n-th device 200-n.

For example, the electronic apparatus 100 may identify the second candidate location 710-2 as the location of the electronic apparatus if the types of the external devices, e.g., the third device 200-3 and the n-th device 200-n, are included in the types of the wireless signals, e.g., the signals transmitted from the third device 200-3 and the n-th device 200-n, corresponding to the candidate location, e.g., the second candidate location 710-2, and the strengths of the wireless signals 710-1 to 710-3 are included in the strengths of the wireless signals corresponding to the candidate location.

The electronic apparatus 100 may determine the external device for obtaining the wireless signal based on the wireless signal. For example, the electronic apparatus 100 may identify the external device whose reliability value is greater than or equal to the predetermined value. The electronic apparatus 100 may identify the location of the electronic apparatus 100 based on the wireless signal received from the identified external device.

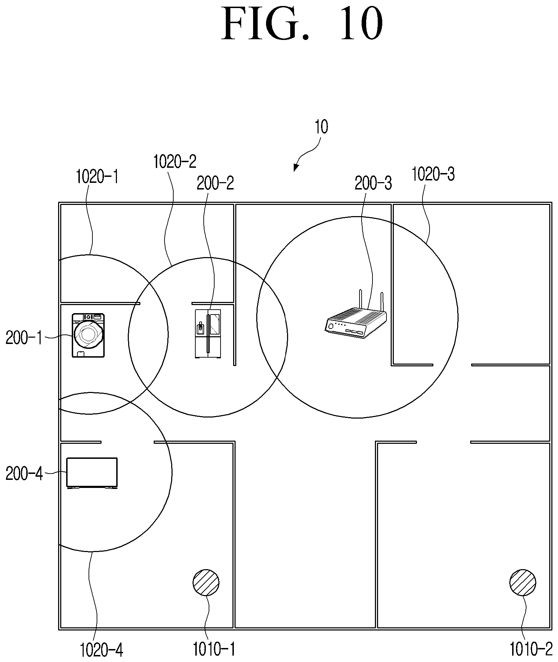

FIG. 10 is a diagram illustrating an example of a case where the electronic apparatus is incapable of identifying the location of the electronic apparatus via the LiDAR sensor or the wireless signals.

According to an embodiment, the electronic apparatus 100 may determine whether the location of the electronic apparatus 100 is capable of being identified based on wireless signals corresponding to a plurality of candidate locations 1010-1 and 1010-2.

According to an embodiment, the electronic apparatus 100 may obtain the types and strengths of the wireless signals corresponding to the first candidate location 1010-1. The electronic apparatus 100 may obtain the types and strengths of the wireless signals corresponding to the second candidate location 1010-2.

For example, the electronic apparatus 100 may determine that the location of the electronic apparatus 100 is incapable of being identified if the electronic apparatus 100 receives the wireless signal from the external device, e.g., the second device, that is not included in the types of the wireless signals, e.g., the first device and the fourth device, corresponding to the first candidate locations 1010-1 and the second candidate location 1010-2.

For example, the electronic apparatus 100 may determine that the location of the electronic apparatus 100 is incapable of being identified if the electronic apparatus 100 does not receive the wireless signal from the external device, e.g., the first device or the fourth device, that is included in the types of the wireless signals, e.g., the first device and the fourth device, corresponding to the first candidate location 1010-1 and the second candidate location 1010-2.

For example, the electronic apparatus 100 may determine that the location of the electronic apparatus 100 is incapable of being identified if the strength of the wireless signal corresponding to the first candidate location 1010-1 and the second candidate location 1010-2 is less than the threshold value e.g., -90 dB. The signal may be weak in an external region other than threshold regions 1020-1 to 1020-4 for the signal strengths transmitted from the plurality of external devices 200-1 to 200-4, and the location of the electronic apparatus 100 may be incapable of being identified.

In operation 430-N and operation 440 shown in FIG. 4, if it is determined that the location, or the current location, of the electronic apparatus 100 is incapable of being identified via the LiDAR sensor 125 or the wireless signal, the electronic apparatus 100 may transmit an audio output command to one of the plurality of external devices 200-1 to 200-n via the communication circuit 115. The electronic apparatus 100 may receive the audio signal output from the external device through the microphone 120.

According to an embodiment, the electronic apparatus 100 may identify the external device located near the candidate location. For example, the electronic apparatus 100 may identify a region, e.g., region 1110 or 1115),including the candidate location among the plurality of regions 1110 to 1130 based on the map. The electronic apparatus 100 may identify the external device, e.g., the fourth external device 200-4, located in the region including the candidate location. The electronic apparatus 100 may transmit the audio output command to the fourth external device 200-4. However, the electronic apparatus 100 may identify the external device to transmit the audio output command based on various criteria, such as the external device within a predetermined radius from the candidate location, and the external device having the strongest wireless signal strength.

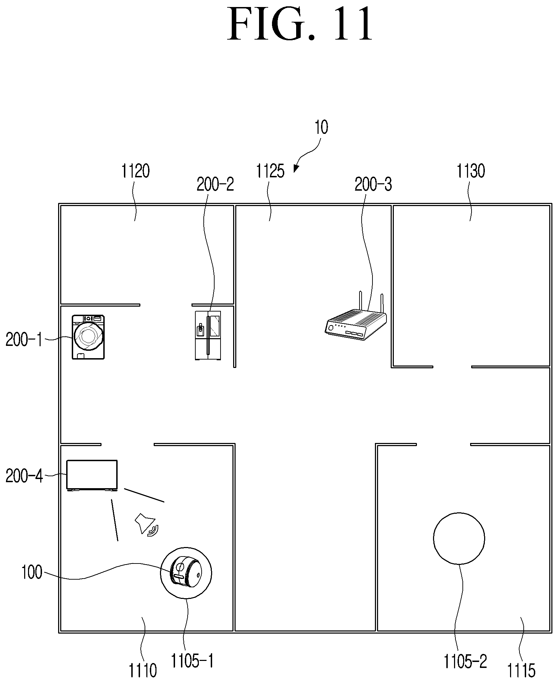

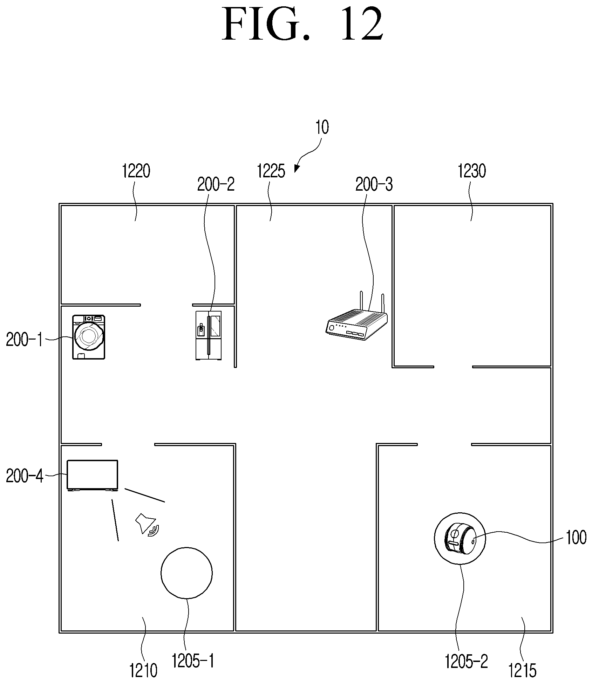

In operation 450 shown in FIG. 4, the electronic apparatus 100 may receive, through the microphone 120, the audio signal output from the external device based on the command corresponding to the audio output. The electronic apparatus 100 may identify the current location of the electronic apparatus 100 among one or more candidate locations based on the audio signal. An operation for identifying the current location of the electronic apparatus 100 among one or more candidate locations based on the audio signal is described with reference to FIGS. 11 and 12.

FIG. 11 is a diagram illustrating an example of the operation of the electronic apparatus to identify the location of the electronic apparatus based on the audio signal.

Referring to FIG. 11, the electronic apparatus 100 may be located at a first candidate location 1105-1 among one or more candidate locations 1105-1 and 1105-2. The electronic apparatus 100 may transmit the audio signal output command to the fourth device 200-4 located near the first candidate location 1105-1. The fourth device 200-4 may output the audio signal in response to receiving the audio signal output command. The electronic apparatus 100 may receive the audio signal output from the fourth device 200-4 through the microphone 120.

According to an embodiment, the electronic apparatus 100 may identify the location of the electronic apparatus 100 among one or more candidate locations 1105-1 and 1105-2 based on a direction from which the audio signal is originated and/or an strength of the audio signal.

According to an embodiment, the electronic apparatus 100 may identify the direction from which the audio signal is originated and the strength of the audio signal by using the plurality of microphones 120 included in the electronic apparatus 100. For example, the electronic apparatus 100 may identify the direction from which the audio signal is output based on a time difference at which the audio signal arrives at the plurality of microphones 120. For example, the electronic apparatus 100 may identify that the audio signal is originated from a direction in which the microphone 120 that first detects the audio signal is located among the plurality of microphones 120.

For example, the electronic apparatus 100 may identify the location from which the audio signal is originated based on a phase difference between the audio signals received by the plurality of microphones 120. The electronic apparatus 100 may identify an arrival time of the audio signal based on the phase difference between the audio signals. The electronic apparatus 100 may identify the location from which the audio signal is originated based on an arrival time difference in the audio signals.

According to an embodiment, the electronic apparatus 100 may receive the audio signal from the fourth device 200-4. The electronic apparatus 100 may identify that the audio signal is originated from a region 1110 in which the electronic apparatus is located based on the audio signal received from the fourth device 200-4. The electronic apparatus 100 may identify the first candidate location 1105-1, which is a region in which the fourth device 200-4 is located among a plurality of regions 1110 to 1130, as the location of the electronic apparatus 100.

FIG. 12 is a diagram illustrating an example of an operation of the electronic apparatus to identify the location of the electronic apparatus based on the audio signal.

Referring to FIG. 12, the electronic apparatus 100 may be located at a second candidate location 1205-2 among one or more candidate locations 1205-1 and 1205-2. The electronic apparatus 100 may transmit the audio signal output command to the fourth device 200-4 located near the first candidate location 1205-1. The fourth device 200-4 may output the audio signal in response to receiving the audio signal output command. The electronic apparatus 100 may receive the audio signal output from the fourth device 200-4 through the microphone 120.

The electronic apparatus 100 may identify that the electronic apparatus 100 is not located in a first region 1210 among a plurality of regions 1210 to 1230 based on the audio signal. That is, the electronic apparatus 100 may identify that the electronic apparatus 100 is not located in the region 1210 in which the fourth external device 200-4 is located based on the strength of the audio signal being weak and the audio signal reflected from an obstacle. The electronic apparatus 100 may identify, as the location of the electronic apparatus 100, the candidate location, e.g., the second candidate location 1205-2, that is not included in the first region 1210 in which the fourth external device 200-4 is located among one or more candidate locations 1205-1 and 1205-2.

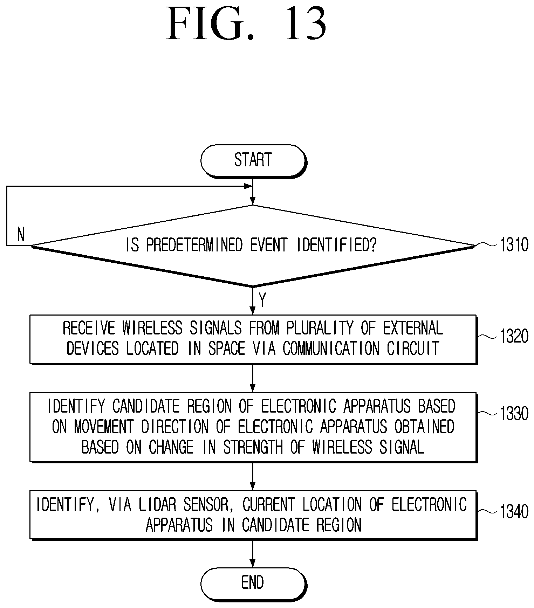

FIG. 13 is a flowchart illustrating an operation for identifying the location of the electronic apparatus if the loss situation occurs while the electronic apparatus is being moved.

The processor 105 of the electronic apparatus 100 may be arranged to perform at least one operation among the operations shown in FIG. 13. If executed by the processor 105 of the electronic apparatus 100, the instructions stored in the memory 110 of the electronic apparatus 100 may cause the electronic apparatus 100 to perform the operations in FIG. 13. However, the present disclosure is not limited thereto, and the operations in FIG. 13 may be performed separately by the server or the electronic apparatus 100. For example, among the operations in FIG. 13, "operation A" may be performed by "the electronic apparatus", and "operation B" may be performed by "the server" correspondingly to the discussion of subsets of operations A and B give above.

According to an embodiment, in operation 1310, the electronic apparatus 100 may identify the predetermined event. According to an embodiment, the predetermined event may include an event in which the current location of the electronic apparatus 100 is incapable of being obtained due to the change in the location of the electronic apparatus 100 caused by the user. For example, the predetermined event may include a case where the electronic apparatus 100 is incapable of identifying the location of the electronic apparatus 100 while being carried by the user. The electronic apparatus 100 may identify whether the electronic apparatus 100 is moved by using the sensor unit 130. For example, the electronic apparatus 100 may identify whether the electronic apparatus 100 is moved based on the sensor data obtained from the gyroscope sensor or the acceleration sensor. The electronic apparatus 100 may identify that the predetermined event occurs if the electronic apparatus 100 is identified as being moved in the loss situation.

According to an embodiment, in operations 1310-Y and 1320, the electronic apparatus 100 may receive the wireless signal from each of the plurality of external devices 200-1 to 200-n located in the space 10 via the communication circuit 115 if the predetermined event is identified as occurring.

According to an embodiment, in operation 1330, the electronic apparatus 100 may identify a candidate region of the electronic apparatus 100 based on the location of the electronic apparatus 100 obtained based on a change in the strength of the wireless signal (or the signal).

According to an embodiment, the electronic apparatus 100 may identify, via the LiDAR sensor 125, the current location in the candidate region associated with the movement direction of the electronic apparatus 100 obtained based on the change in the strength of the signal.

For example, the electronic apparatus 100 may identify the movement direction of the electronic apparatus 100 based on the strength of the wireless signal received from the external device. For example, the electronic apparatus 100 may identify that the electronic apparatus 100 is being moved in the direction in which the external device is located if the strength of the wireless signal received from the external device increases. For example, the electronic apparatus 100 may identify that the electronic apparatus 100 is being moved in a direction away from the external device if the strength of the wireless signal received from the external device decreases.

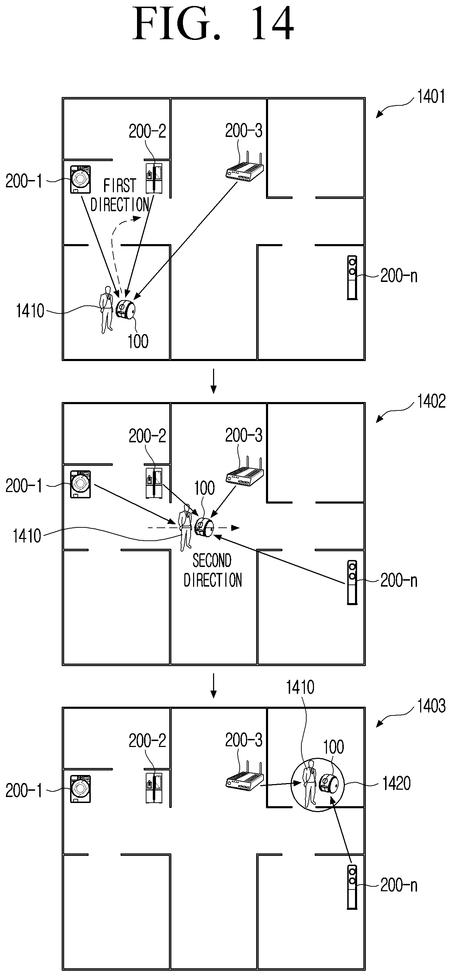

According to an embodiment, the electronic apparatus 100 may identify the candidate region based on the location of the electronic apparatus 100 before the predetermined event occurs and the movement direction of the electronic apparatus 100 after the predetermined event occurs. This configuration is described in detail with reference to FIG. 14.

According to an embodiment, in operation 1340, the electronic apparatus 100 may identify, via the LiDAR sensor 125, the location of the electronic apparatus 100 in the candidate region.

FIG. 14 is a diagram illustrating an example of an operation for identifying the location of the electronic apparatus if the loss situation occurs while the electronic apparatus is being moved.

Referring to FIG. 14, at stage 1401, a user 1410 performs an operation of lifting the electronic apparatus 100, and accordingly, the electronic apparatus 100 may be incapable of identifying the location of the electronic apparatus 100 in the space.

Referring to FIG. 14, at stage 1402, the user 1410 may move within space while lifting and carrying the electronic apparatus 100. In this case, the electronic apparatus 100 may identify that the predetermined event occurs. For example, the electronic apparatus 100 may identify that the predetermined event occurs if the electronic apparatus 100 is identified as being moved in the loss situation by using the gyro sensor or the acceleration sensor.

According to an embodiment, the electronic apparatus 100 may receive the wireless signals from the plurality of external devices 200-1 to 200-n while being moved within the space. The electronic apparatus 100 may detect the change in the strength of the wireless signals received from the plurality of external devices 200-1 to 200-n. For example, the electronic apparatus 100 may detect that the strengths of the wireless signals received from the first external device 200-1 and the second external device 200-2 gradually increase and then gradually decrease. For example, the electronic apparatus 100 may detect that the strengths of the wireless signals received from the third external device 200-3 and the fourth external device 200-4 gradually increase.

According to an embodiment, the electronic apparatus 100 may identify the movement direction of the electronic apparatus 100 based on the change in the strengths of the wireless signals received from the plurality of external devices 100. For example, the electronic apparatus 100 may identify that the electronic apparatus 100 is being moved in a first direction based on the identified increase in the strengths of the wireless signals received from the first external device 200-1 and the second external device 200-2. For example, the electronic apparatus 100 may identify that the electronic apparatus 100 is being moved in a second direction based on the identified decrease in the strengths of the wireless signals received from the first external device 200-1 and the second external device 200-2 and the increase in the strengths of the wireless signals received from the third external device 200-3 and the fourth external device 200-4.

Referring to FIG. 14, at stage 1403, the electronic apparatus 100 may identify a candidate region 1420 of the electronic apparatus 100 based on the movement direction of the electronic apparatus that is obtained based on the change in the strength of the wireless signal. For example, the electronic apparatus 100 may identify a room located in the movement direction of the electronic apparatus 100 as the candidate region 1420, and the present disclosure is not limited thereto.

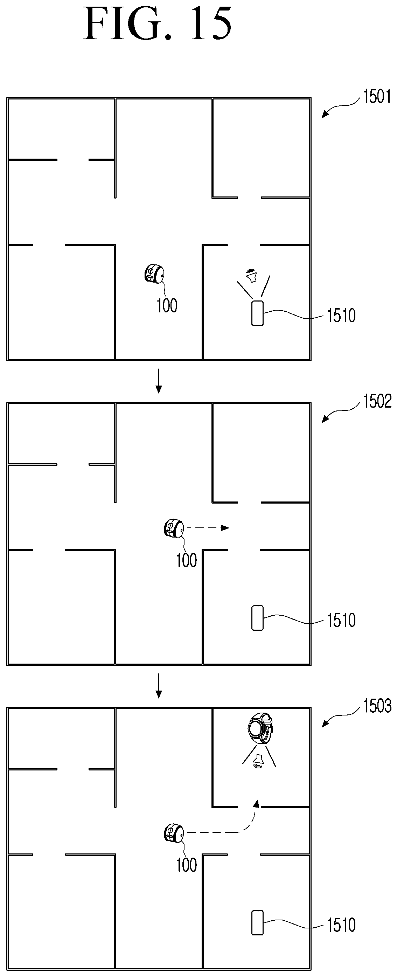

FIG. 15 is a diagram illustrating an example of an operation of the electronic apparatus moving to a user location.

Referring to FIG. 15, at stage 1501, the electronic apparatus 100 according to an embodiment may transmit the audio output command to a user smartphone 1510 via the communication circuit 115. The user smartphone 1510 may output the audio signal in response to receiving the audio output command.

Referring to FIG. 15, at stage 1502, the electronic apparatus 100 may receive the audio signal output from the smartphone 1510. The electronic apparatus 100 may identify a location of the user smartphone 1510 based on the output audio signal. The method for identifying the location of the smartphone 1510 based on the audio signal is described above, and a redundant description thereof is thus omitted. The electronic apparatus 100 may control the driving unit 155 to cause the electronic apparatus 100 to move to the identified location. While moving to the user smartphone 1510, the electronic apparatus 100 may identify whether the strength of the wireless signal received from the user smartphone 1510 increases. If the strength of the wireless signal received from the user smartphone 1510 does not increase, the electronic apparatus 100 may transmit the audio output command to the user smartphone 1510 and repeat the operation described above at stage 1501 in FIG. 15.

Referring to FIG. 15, at stage 1503, While moving to the user smartphone 1510, the electronic apparatus 100 may receive the wireless signal from a wearable device 1520. The wearable device 1520 has a higher probability of being the actual user location than the user smartphone 1510, and the electronic apparatus 100 may thus move in a direction in which the wearable device 1520 is located. For example, the electronic apparatus 100 may transmit the audio output command to the wearable device 1520. The electronic apparatus 100 may move in the direction in which the wearable device 1520 is located based on the audio signal received from the wearable device 1520.

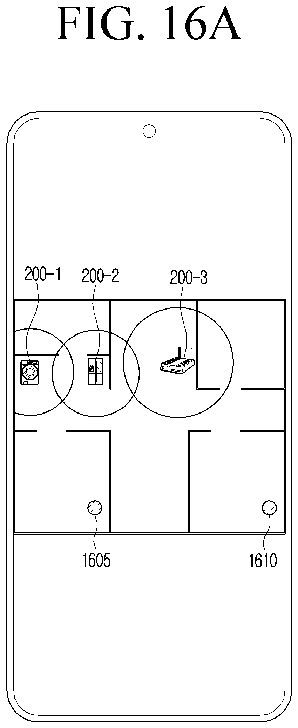

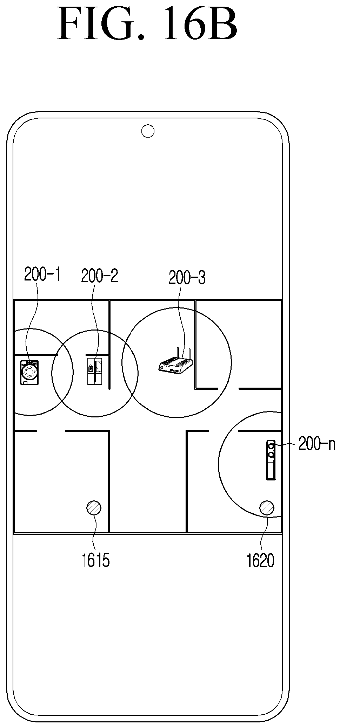

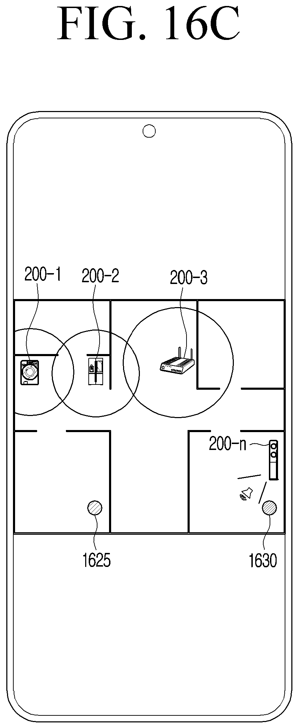

FIGS. 16A, 16B, and 16C are diagrams each illustrating an example of an operation of the electronic apparatus to display a location search status on a display device.

According to an embodiment, the electronic apparatus 100 may transmit information including map information and the location search status to the display device. The display device may include an electronic apparatus including a display, such as the user terminal device, a TV, or a laptop, but is not limited thereto.

The information including the location search status may include at least one of information about at least one candidate location, information about a probability that the electronic apparatus 100 is located at the candidate location, or information about the external device that outputs the audio signal. The display device may display the information received from the electronic apparatus 100 on the display.

Referring to FIG. 16A, the electronic apparatus 100 may obtain the candidate location from the LiDAR sensor 125. If a distance between the candidate location and the plurality of external devices is long, it may be difficult to obtain the location of the electronic apparatus 100 based on the wireless signal. Therefore, the electronic apparatus 100 is required to identify the location of the electronic apparatus 100 among one or more candidate locations by using only the LiDAR sensor 125. In this case, the electronic apparatus 100 may obtain a probability, e.g., "low", that the electronic apparatus 100 is located at at least one candidate location. The electronic apparatus 100 may transmit the information about the map and the location search status to the display device. The display device may display UIs 1605 and 1610 indicating the map corresponding to the space and the probability that the electronic apparatus 100 is located at the candidate location. For example, the display device may display the UIs corresponding to the "low" probability at the first candidate location 1605 and the second candidate location 1610.

Referring to FIG. 16B, the electronic apparatus 100 may obtain the candidate location from the LiDAR sensor 125. The electronic apparatus 100 may identify the location at which the electronic apparatus 100 is located among the candidate locations based on the wireless signals received from the plurality of external devices 200-1 to 200-n. In this case, the electronic apparatus 100 may obtain a probability that the electronic apparatus 100 is located at each candidate location. The electronic apparatus 100 may transmit the information about the map and the location search status to the display device. The display device may display UIs 1615 and 1620 indicating the map corresponding to the space and the probability that the electronic apparatus 100 is located at the candidate location.

Referring to FIG. 16C, the electronic apparatus 100 may obtain the candidate location from the LiDAR sensor 125. The electronic apparatus 100 may identify the location of the electronic apparatus 100 among the candidate locations based on the audio signal received from any one of the external devices 200-1 to 200-n. In this case, the electronic apparatus 100 may obtain the probability that the electronic apparatus 100 is located at each candidate location. The electronic apparatus 100 may transmit the information about the map and the location search status to the display device. The display device may display UIs 1625 and 1630 indicating the map corresponding to the space and the probability that the electronic apparatus 100 is located at the candidate location.

The technical problems to be solved by the present disclosure are not limited to the aforementioned problems, and any other technical problems not mentioned herein will be clearly understood by those skilled in the art to which the present disclosure pertains.

Effects obtainable in the present disclosure are not limited to the aforementioned effects. That is, other effects that are not mentioned may be obviously understood by those skilled in the art to which the present disclosure pertains.

According to an embodiment of the present disclosure, electronic apparatus for traveling within the space may be provided.

For example, the electronic apparatus may include the communication circuit, the LiDAR sensor, the memory storing instructions, and at least one processor including processing circuitry.

For example, wherein the instructions, when executed by the at least one processors individually or collectively, cause the electronic apparatus to receive the wireless signal from each of the plurality of external devices located in the space via the communication circuit, based on identifying that the predetermined event occurs, identify the candidate region of the electronic apparatus based on the movement direction of the electronic apparatus obtained based on the change in the strength of the wireless signal, and identify, via the LiDAR sensor, the location of the electronic apparatus in the candidate region.

For example, the predetermined event may include the event in which the location of the electronic apparatus is incapable of being identified while the electronic apparatus is being carried by the user.

For example, the electronic apparatus may further include the microphone.

For example, wherein the instructions, when executed by the at least one processors individually or collectively, cause the electronic apparatus to receive, through the microphone, the audio signal output from the corresponding external device based on transmitting the audio output command to the corresponding external device among the plurality of external devices via the communication circuit, and identify the location of the electronic apparatus based on the audio signal, if it is determined that the location of the electronic apparatus is incapable of being identified via the LiDAR sensor.

The electronic apparatus for traveling within the space according to the present disclosure may include: the communication circuit; the LiDAR sensor; the microphone; the memory storing instructions; and at least one processor including the processing circuitry.

For example, wherein the instructions, when executed by the at least one processors individually or collectively, cause the electronic apparatus to obtain at least one candidate location of the electronic apparatus in the space from the LiDAR sensor if the predetermined event occurs, control the communication circuit to transmit the command corresponding to the audio output to the first external device among the plurality of external devices if the current location of the electronic apparatus among one or more candidate locations is incapable of being obtained based on the signal received from each of the plurality of external devices located in the space via the LiDAR sensor or the communication circuit, and obtain the current location among one or more candidate locations based on the audio signal if the audio signal output from the first external device is received, through the microphone, based on the command corresponding to the audio output.

For example, the predetermined event may include the event in which the stationary location of the electronic apparatus is incapable of being obtained while the electronic apparatus is stationary.

For example, wherein the instructions, when executed by the at least one processors individually or collectively, cause the electronic apparatus to output the laser signal from the LiDAR sensor, obtain information corresponding to the space where the electronic apparatus is located based on the received laser signal if the laser signal reflected from the object in the space where the electronic apparatus is located is received, and obtain at least one candidate location based on the information corresponding to the space where the electronic apparatus is located.

For example, wherein the instructions, when executed by the at least one processors individually or collectively, cause the electronic apparatus to obtain the strength of the signal received from each of the plurality of external devices via the communication circuit, and obtain the current location based on the strength of the signal received from each of the plurality of external devices and the strength of the signal corresponding to at least one candidate location.

For example, wherein the instructions, when executed by the at least one processors individually or collectively, cause the electronic apparatus to obtain the reliability of each of the plurality of external devices based on the strength of the signal received from each of the plurality of external devices, and obtain the current location based on the strength of the signal received from the external device having the reliability greater than or equal to the predetermined value among the plurality of external devices.

For example, the reliability of each of the plurality of external devices may be obtained based on the movement history of each external device in the space for each of the plurality of external devices.

For example, wherein the instructions, when executed by the at least one processors individually or collectively, cause the electronic apparatus to obtain the first external device located near the candidate location among one or more candidate locations, transmit the command corresponding to the audio output to the first external device via the communication circuit, receive, through the microphone, the audio signal output from the first external device based on the command corresponding to the transmitted audio output, and obtain the current location based on the output location and strength of the audio signal obtained from the received audio signal.

For example, the predetermined event may include the event in which the current location is incapable of being obtained due to the change in the location of the electronic apparatus caused by the user.

For example, wherein the instructions, when executed by the at least one processors individually or collectively, cause the electronic apparatus to receive the wireless signal from each of the plurality of external devices located in the space via the communication circuit if the predetermined event occurs, identify the candidate region of the electronic apparatus based on the movement direction of the electronic apparatus obtained based on the change in the strength of the wireless signal, and identify, via the LiDAR sensor, the current location of the electronic apparatus in the candidate region.

For example, wherein the instructions, when executed by the at least one processors individually or collectively, cause the electronic apparatus to output the laser signal from the LiDAR sensor, obtain information corresponding to the space where the electronic apparatus is located based on the received laser signal if the laser signal reflected from the object in the space where the electronic apparatus is located is received, and identify the current location in the candidate region based on the information corresponding to the space where the electronic apparatus is located.

According to the present disclosure, a controlling method of the electronic apparatus for traveling within the space may include: obtaining at least one candidate location of the electronic apparatus in the space from the light detection and ranging (LiDAR) sensor included in the electronic apparatus if the predetermined event occurs; transmitting the command corresponding to the audio output to the first external device among the plurality of external devices if the current location of the electronic apparatus among one or more candidate locations is incapable of being obtained based on the signal received from the LiDAR sensor or each of the plurality of external devices located in the space; and obtaining the current location among one or more candidate locations based on the audio signal if the audio signal output from the first external device is received based on the command corresponding to the audio output.

For example, the predetermined event may include the event in which the stationary location of the electronic apparatus is incapable of being obtained while the electronic apparatus is stationary.

For example, the obtaining of at least one candidate location in the space may include outputting the laser signal from the LiDAR sensor, obtaining information corresponding to the space where the electronic apparatus is located based on the received laser signal if the laser signal reflected from the object in the space where the electronic apparatus is located is received, and obtaining at least one candidate location based on the information corresponding to the space where the electronic apparatus is located.

For example, the obtaining of the current location among the one or more candidate locations may include obtaining the strength of the signal received from each of the plurality of external devices, and obtaining the current location based on the strength of the signal received from each of the plurality of external devices and the strength of the signal corresponding to at least one candidate location.

For example, the obtaining of the current location based on the strength of the signal corresponding to at least one candidate location may include obtaining the reliability of each of the plurality of external devices based on the strength of the signal received from each of the plurality of external devices, and obtaining the current location based on the strength of the signal received from the external device having the reliability greater than or equal to the predetermined value among the plurality of external devices.

For example, the reliability of each of the plurality of external devices may be obtained based on the movement history of each external device in the space for each of the plurality of external devices.

For example, the obtaining of the current location among the one or more candidate locations may include obtaining the first external device located near the candidate location among one or more candidate locations, transmitting the command corresponding to the audio output to the first external device via the communication circuit, receiving the audio signal output from the first external device based on the command corresponding to the transmitted audio output, and obtaining the current location based on the output location and strength of the audio signal obtained from the received audio signal.

For example, the predetermined event may include the event in which the current location is incapable of being obtained due to the change in the location of the electronic apparatus caused by the user.

For example, the obtaining of the current location among the one or more candidate locations may include receiving the wireless signal from each of the plurality of external devices located in the space via the communication circuit if the predetermined event occurs, identifying the candidate region of the electronic apparatus based on the movement direction of the electronic apparatus obtained based on the change in the strength of the wireless signal, and identifying, via the LiDAR sensor, the current location of the electronic apparatus in the candidate region.

In a non-transitory computer-readable medium storing instructions executed by a control unit of an electronic apparatus to cause the electronic apparatus to perform the method according to the present disclosure, the method may include obtaining at least one candidate location of the electronic apparatus in the space from the LiDAR sensor included in the electronic apparatus if the predetermined event occurs, transmitting the command corresponding to the audio output to the first external device among the plurality of external devices if the current location of the electronic apparatus among one or more candidate locations is incapable of being obtained based on the signal received from the LiDAR sensor or each of the plurality of external devices located in the space, and obtaining the current location among one or more candidate locations based on the audio signal if the audio signal output from the first external device is received based on the command corresponding to the audio output.

Meanwhile, an embodiment of the present disclosure may also be implemented in the form of a recording medium including an instruction which may be executed by a computer, such as a program module executed by the computer. A computer-readable medium may be any available medium that may be accessed by a computer, and include both volatile and non-volatile media, and removable and non-removable media. In addition, the computer-readable medium may include a computer storage medium and a communication medium. The computer storage medium may include both the volatile and non-volatile media and both the removable and non-removable media, implemented using any method or technology for storing information such as a computer-readable instruction, a data structure, a program module or another data. The communication medium may typically include other data in a modulated data signal, such as computer-readable instructions, data structures, or program modules.

In addition, the computer-readable storage medium may be provided in the form of a non-transitory storage medium. Here, the "non-transitory storage medium" may refer to a tangible device and only indicate that this storage medium does not include a signal (e.g., electromagnetic wave), and this term does not distinguish a case where data is stored semi-permanently in the storage medium and a case where data is temporarily stored in the storage medium from each other. For example, the "non-transitory storage medium" may include a buffer in which data is temporarily stored.

According to an embodiment, the methods according to the various embodiments disclosed in the present disclosure may be included and provided in a computer program product. The computer program product may be traded as a commodity between a seller and a purchaser. The computer program product may be distributed in a form of the machine-readable storage medium, e.g., a compact disc read only memory, or may be distributed online, e.g., by download or upload, via an application store or directly between two user devices e.g., smartphones. In case of the online distribution, at least a part of the computer program product, e.g., downloadable app, may be at least temporarily stored or temporarily provided in the machine-readable storage medium such as the memory of a manufacturer server, an application store server, or a relay server.

The above-described embodiments are illustratively provided, and it is apparent to those skilled in the art to which the present disclosure pertains that the present disclosure may be embodied in another specific form without any change in its technical idea or essential characteristics. Therefore, it should be understood that the embodiments described hereinabove are illustrative rather than restrictive in all aspects. For example, the components each described as a single type may also be implemented in a distributed manner, and similarly, the components described as being distributed from each other may also be implemented in a coupled manner.

## Claims

1. An electronic apparatus (100) for traveling within a space, the apparatus comprising:
a communication circuit (115);
a light detection and ranging, "LiDAR", sensor (125);
a microphone (120);
a memory (110) storing instructions; and
at least one processor (105) comprising processing circuitry,
wherein the instructions, when executed by the at least one processor (105) individually or collectively, cause the electronic apparatus (100) to:
obtain, using the LiDAR sensor (125), at least one candidate location of the electronic apparatus in the space based on a predetermined event having occurred,
based on a current location of the electronic apparatus not being obtained based on sensor data obtained from the LiDAR sensor (125), or signals received from each of the plurality of external devices (200) located in the space via the communication circuit(115), control the communication circuit (115) to transmit a command corresponding to an audio output to a first external device (200-1) among a plurality of external devices (200) , and
on receipt, through the microphone (120), of an audio signal output from the first external device (200-1) based on the command corresponding to the audio output, obtain the current location from among the one or more candidate locations based on the audio signal output from the first external device(200-1).

2. The apparatus as claimed in claim 1, wherein the predetermined event comprises an event in which a location of the electronic apparatus is incapable of being obtained while the electronic apparatus is stationary.

3. The apparatus as claimed in claim 1 or 2, wherein the instructions, when executed by the at least one processor(105) individually or collectively, cause the electronic apparatus (100) to:
output a laser signal from the LiDAR sensor (125),
obtain information corresponding to the space where the electronic apparatus is located based on the received laser signal if the laser signal is received by reflection from an object in the space where the electronic apparatus (100) is located, and
obtain the at least one candidate location based on the information corresponding to the space where the electronic apparatus (100) is located.

4. The apparatus as claimed in claim 1, 2 or 3, wherein the instructions, when executed by the at least one processor(105) individually or collectively, cause the electronic apparatus to:
obtain a strength of the signal received from each of the plurality of external devices (200) via the communication circuit (115), and
obtain the current location based on the strength of the signal received from each of the plurality of external devices (200) and a strength of a signal corresponding to the at least one candidate location.

5. The apparatus as claimed in any preceding claim, wherein the instructions, when executed by the at least one processor(105) individually or collectively, cause the electronic apparatus (100) to:
obtain reliability data of each of the plurality of external devices (200) based on the strength of the signal received from each of the plurality of external devices (200), and
obtain the current location based on the strength of the signal received from an external device having reliability greater than or equal to a predetermined value, from among the plurality of external devices (200).

6. The apparatus as claimed in claim 5, wherein the reliability of each of the plurality of external devices (200) is obtained based on a movement history of each external device in the space for each of the plurality of external devices (200).

7. The apparatus as claimed in claim 1, wherein the instructions, when executed by the at least one processor(105) individually or collectively, cause the electronic apparatus (100) to:
obtain the first external device (200-1) located near the candidate location among the one or more candidate locations,
transmit the command corresponding to the audio output to the first external device (200-1) via the communication circuit (125),
receive, through the microphone (120), the audio signal output from the first external device (200-1) based on the command corresponding to the transmitted audio output, and
obtain the current location based on the output location and strength of the audio signal obtained from the received audio signal.

8. The apparatus as claimed in any preceding claim, wherein the predetermined event includes an event in which the current location is incapable of being obtained due to a change in the location of the electronic apparatus (100) caused by a user.

9. The apparatus as claimed in any preceding claim, wherein the instructions, when executed by the at least one processor(105) individually or collectively, cause the electronic apparatus (100) to:
receive the signal from each of the plurality of external devices (200) located in the space via the communication circuit (115) if the predetermined event occurs, and
identify, via the LiDAR sensor (125), the current location in a candidate region associated with a movement direction of the electronic apparatus (100) obtained based on a change in the strength of the signal.

10. The apparatus as claimed in claim 9, wherein the instructions, when executed by the at least one processor(105) individually or collectively, cause the electronic apparatus (100) to:
output a laser signal from the LiDAR sensor (125),
obtain information corresponding to the space where the electronic apparatus (100) is located based on the received laser signal if the laser signal is received by reflection from an object in the space where the electronic apparatus (100) is located, and
identify the current location in the candidate region based on the information corresponding to the space where the electronic apparatus (100) is located.

11. A controlling method of an electronic apparatus for traveling within a space, the method comprising:
obtaining, using a LiDAR sensor included in the electronic apparatus, at least one candidate location of the electronic apparatus in the space based on a predetermined event having occurred;
based on a current location of the electronic apparatus not being obtained based on sensor data obtained from the LiDAR sensor, or signals received from the plurality of external devices located in the space, transmitting a command corresponding to an audio output to a first external device among a plurality of external devices; and
on receipt of an audio signal output from the first external device (200-1) based on the command corresponding to the audio output, obtaining the current location form among the one or more candidate locations based on the audio signal output from the first external device.

12. The method as claimed in claim 11, wherein the predetermined event comprises an event in which a location of the electronic apparatus is incapable of being obtained while the electronic apparatus is stationary.

13. The method as claimed in claim 11 or 12, wherein the obtaining of the at least one candidate location in the space includes
outputting a laser signal from the LiDAR sensor,
obtaining information corresponding to the space where the electronic apparatus is located based on the received laser signal if the laser signal is received by reflection from an object in the space where the electronic apparatus is located is received, and
obtaining the at least one candidate location based on the information corresponding to the space where the electronic apparatus is located.

14. The method as claimed in claim 12, wherein the obtaining of the current location among the one or more candidate locations includes
obtaining a strength of the signal received from each of the plurality of external devices (1320), and
obtaining the current location based on the strength of the signal received from each of the plurality of external devices and a strength of a signal corresponding to the at least one candidate location (1330).

15. The method as claimed in claim 14, wherein the obtaining of the current location based on the strength of the signal corresponding to the at least one candidate location includes
obtaining reliability data of each of the plurality of external devices based on the strength of the signal received from each of the plurality of external devices, and
obtaining the current location based on the strength of the signal received from an external device having reliability greater than or equal to a predetermined value among the plurality of external devices.
